(19) Europäisches Patentamt
European Patent Office
Office européen des brevets

(11) **EP 4 614 125 A1**

(12) **EUROPEAN PATENT APPLICATION**
published in accordance with Art. 153(4) EPC

(43) Date of publication:
**10.09.2025 Bulletin 2025/37**

(21) Application number: **23890798.4**

(22) Date of filing: **15.11.2023**

(51) International Patent Classification (IPC):
*G01K 11/00* (2006.01)    *G01J 5/48* (2022.01)

(52) Cooperative Patent Classification (CPC):
**G01J 5/48; G01K 11/00**

(86) International application number:
**PCT/CN2023/131686**

(87) International publication number:
**WO 2024/104365 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.11.2022 CN 202211427331**

(71) Applicant: **Huawei Technologies Co., Ltd.
Shenzhen, Guangdong 518129 (CN)**

(72) Inventors:
• **JIANG, Yongbin
Shenzhen, Guangdong 518129 (CN)**

• **LI, Qingwu
Nanjing, Jiangsu 210098 (CN)**
• **LI, Pengkun
Shenzhen, Guangdong 518129 (CN)**
• **XU, Chang
Nanjing, Jiangsu 210098 (CN)**
• **YANG, Hui
Shenzhen, Guangdong 518129 (CN)**
• **ZHOU, Yaqin
Nanjing, Jiangsu 210098 (CN)**

(74) Representative: **Goddar, Heinz J.
Boehmert & Boehmert
Anwaltspartnerschaft mbB
Pettenkoferstrasse 22
80336 München (DE)**

(54) **DEVICE TEMPERATURE MEASUREMENT METHOD AND RELATED DEVICE**

(57)    A device temperature measurement method and a related device thereof are provided, to accurately determine a temperature abnormal area in a target device, thereby effectively improving accuracy of a temperature measurement result of the target device. The device temperature measurement method includes: A robot controls, under an instruction of a worker, a camera to photograph a target area including a target device and another device to obtain a visible light image and a thermal infrared image of the target area, and sends the visible light image and the thermal infrared image to a cloud server. Then, the cloud server may process the visible light image and the thermal infrared image of the target area to obtain a visible light image and a thermal infrared image of the target device. Next, the cloud server may continue to process the visible light image and the thermal infrared image of the target device to obtain a thermal infrared image of a temperature abnormal area in the target device. Finally, the cloud server may determine a temperature measurement result of the temperature abnormal area in the target device based on the thermal infrared image of the temperature abnormal area, and report the temperature measurement result to the worker.

Control a camera to photograph a target area to obtain a visible light image of the target area and a thermal infrared image of the target area, where the target area includes a target device — 401

Process the visible light image of the target area and the thermal infrared image of the target area to obtain a visible light image of the target device and a thermal infrared image of the target device — 402

Process the visible light image of the target device and the thermal infrared image of the target device to obtain a thermal infrared image of a temperature abnormal area — 403

Determine a temperature measurement result of the temperature abnormal area based on the thermal infrared image of the temperature abnormal area — 404

FIG. 4

Processed by Luminess, 75001 PARIS (FR)

## Description

This application claims priority to Chinese Patent Application No. 20221142733 1.4, filed with the China National Intellectual Property Administration on November 15, 2022 and entitled "DEVICE TEMPERATURE MEASUREMENT METHOD AND RELATED DEVICE THEREOF", which is incorporated herein by reference in its entirety.

## TECHNICAL FIELD

Embodiments of this application relate to the field of device detection technologies, and in particular, to a device temperature measurement method and a related device thereof.

## BACKGROUND

Preventive detection of an electric power equipment in an electrical substation is an important means to maintain the electric power equipment, and measuring a temperature of the electric power equipment is an important link in preventive detection. By measuring the temperature of the electric power equipment, a temperature normal area and a temperature abnormal area in the electric power equipment can be determined. In this way, whether the electric power equipment can work properly, that is, whether the electric power equipment is faulty, can be determined.

Currently, during patrol inspection, a robot in the electrical substation may capture a thermal infrared image of an area including a target electric power equipment, and send the image to a remote cloud server for image analysis. Because the image includes temperatures of all points in the area, the cloud server may determine a temperature normal area and a temperature abnormal area in the target electric power equipment based on the image as a temperature measurement result of the target electric power equipment, and notify a worker of the electrical substation of the temperature measurement result in time, so that the worker can overhaul the abnormal temperature area in the target electric power equipment.

However, electric power equipments in the electrical substation are very dense, and the area may include not only the target electric power equipment, but also another electric power equipment. In this case, when analyzing the thermal infrared image of the area, the cloud server is easily affected by the another electric power equipment, mistakenly considers temperatures of some points near edges of the another electric power equipment as temperatures of some points in the target electric power equipment, and mistakenly determines a temperature abnormal area in the target electric power equipment, resulting in low accuracy of the temperature measurement result of the target electric power equipment.

## SUMMARY

Embodiments of this application provide a device temperature measurement method and a related device thereof, to accurately determine a temperature abnormal area in a target device without generating a misjudgment. This effectively improves accuracy of a temperature measurement result of the target device.

A first aspect of embodiments of this application provides a device temperature measurement method, where the method includes:

A worker delivers an instruction to a robot, and the robot may determine, according to the instruction, an inspection task that needs to be completed, that is, complete temperature measurement for the target device. In this case, in a phase of executing the inspection task, the robot may control a camera to photograph a target area in which the target device is located, to obtain a visible light image of the target area and a thermal infrared image of the target area. It may be understood that the visible light image of the target area presents the entire target area, the thermal infrared image of the target area presents the entire target area. The target area usually means an area within a specified range, and the area includes the target device and an area device.

After obtaining the visible light image of the target area and the thermal infrared image of the target area, the robot may send the visible light image of the target area and the thermal infrared image of the target area to a cloud server. The cloud server may remove, from the visible light image of the target area and the thermal infrared image of the target area, a visible light image of an area that is other than the target device and that is in the target area and the thermal infrared image of the area that is other than the target device and that is in the target area, to obtain a visible light image of the target device and a thermal infrared image of the target device. It may be understood that the visible light image of the target device presents only the target device, and the thermal infrared image of the target device presents only the target device.

After obtaining the visible light image of the target device and the thermal infrared image of the target device, the cloud server may determine, from the visible light image of the target device and the thermal infrared image of the target device, a visible light image of a temperature abnormal area and a thermal infrared image of the temperature abnormal area in the target device. It may be understood that the visible light image of the temperature abnormal area in the target device presents only the temperature abnormal area, and the thermal infrared image of the temperature abnormal area presents only the temperature abnormal area.

After obtaining the visible light image and the thermal infrared image of the temperature abnormal area in the target device, the cloud server may directly use the visible light image of the temperature abnormal area and the thermal infrared image of the temperature abnormal area as a temperature measurement result of the temperature abnormal area in the target device, and feed back the temperature measurement result to the worker, so that the worker finds the temperature abnormal area in the target device based on the temperature measurement result, and repairs the temperature abnormal area in the target device.

It can be learned from the foregoing method that the robot controls, under an instruction of the worker, the camera to photograph a target area including the target device and another device to obtain a visible light image of the target area and a thermal infrared image of the target area, and sends the visible light image and the thermal infrared image to the cloud server. Then, the cloud server may process the visible light image of the target area and the thermal infrared image of the target area, to obtain the visible light image of the target device and the thermal infrared image of the target device. Then, the cloud server may continue to process the visible light image of the target device and the thermal infrared image of the target device, to obtain the thermal infrared image of the temperature abnormal area in the target device. Finally, the cloud server may determine a temperature measurement result of the temperature abnormal area in the target device based on the thermal infrared image of the temperature abnormal area, and report the temperature measurement result to the worker, so that the worker repairs the temperature abnormal area in the target device. In the foregoing process, after obtaining the visible light image and the thermal infrared image of the target area, the cloud server may remove a visible light image and a thermal infrared image of another device from the visible light image and the thermal infrared image of the target area, to obtain the visible light image and the thermal infrared image of the target device. Because the visible light image and the thermal infrared image of the target device present only the target device, in a process of analyzing these images, the cloud server is not affected by another device, and accurately determines the visible light image and the thermal infrared image of the temperature abnormal area in the target device, which is used as a temperature measurement result of the temperature abnormal area in the target device. It can be learned that the cloud server accurately determines the temperature abnormal area in the target device without generating a misjudgment. This effectively improves accuracy of the temperature measurement result of the target device.

In a possible implementation, the method further includes: performing calculation on the thermal infrared image of the target area and the visible light image of the target area to obtain a depth image of the target area; and the processing the visible light image of the target area and the thermal infrared image of the target area to obtain a visible light image of the target device and a thermal infrared image of the target device includes: processing the depth image of the target area, the visible light image of the target area, and the thermal infrared image of the target area to obtain the visible light image of the target device and the thermal infrared image of the target device. In the foregoing implementation, after obtaining the visible light image of the target area and the thermal infrared image of the target area, the cloud server may perform a series of calculation on the visible light image of the target area and the thermal infrared image of the target area to obtain the depth image of the target area. After obtaining the depth image of the target area, the cloud server may remove, from the visible light image of the target area and the thermal infrared image of the target area by using the depth image of the target area, the visible light image of an area that is other than the target device and that is in the target area and the thermal infrared image of the area that is other than the target device and that is in the target area, to obtain the visible light image of the target device and the thermal infrared image of the target device.

In a possible implementation, the method further includes: aligning the visible light image of the target area with the thermal infrared image of the target area to obtain an aligned visible light image of the target area; and the performing calculation on the thermal infrared image of the target area and the visible light image of the target area to obtain a depth image of the target area includes: performing calculation on the thermal infrared image and the aligned visible light image of the target area to obtain the depth image of the target area; and the processing the visible light image of the target area and the thermal infrared image of the target area to obtain a visible light image of the target device and a thermal infrared image of the target device includes: processing the aligned visible light image of the target area, the thermal infrared image of the target area, and the depth image of the target area to obtain the visible light image of the target device and the thermal infrared image of the target device. In the foregoing implementation, after obtaining the visible light image of the target area and the thermal infrared image of the target area, the cloud server may align (including rough correspondence and refined alignment) the visible light image of the target area with the thermal infrared image of the target area based on a first model, to obtain the aligned visible light image of the target area. After obtaining the aligned visible light image of the target area, the cloud server may further perform a series of calculation on the aligned visible light image of the target area and the thermal infrared image of the target area based on a second model, to obtain the depth image of the target area. After obtaining the depth image of the target area, the cloud server may complete instance segmentation on the aligned visible light image of the target area, the thermal infrared image of the target area, and the depth image of the target area based on a third model and a fourth model, to accurately obtain the visible light image of the target device and the thermal infrared image of the target device.

In a possible implementation, the method further includes: determining a thermal infrared image of a foreground and a visible light image of the foreground in the target area from the thermal infrared image and the aligned visible light image of the target area based on the depth image of the target area, where the foreground includes the target device; and the processing the aligned visible light image of the target area, the thermal infrared image of the target area, and the depth image of the target area to obtain the visible light image of the target device and the thermal infrared image of the target device includes: processing the depth image of the target area, the thermal infrared image of the foreground, and the visible light image of the foreground to obtain the visible light image of the target device and the thermal infrared image of the target device. In the foregoing implementation, after obtaining the depth image of the target area, the cloud server may further remove, from the thermal infrared image and the aligned visible light image of the target area based on the depth image of the target area, a visible light area of a background in the target area and a thermal infrared image of the background in the target area, and retaining the thermal infrared image of the foreground in the target area and the visible light image of the foreground in the target area. The visible light image of the foreground in the target area presents only the foreground of the target area, the thermal infrared image of the foreground in the target area presents only the foreground of the target area, the foreground of the target area includes the target device and another device, and the background of the target area is an environment in which the target device is located. After obtaining the thermal infrared image of the foreground in the target area and the visible light image of the foreground in the target area, the cloud server may complete instance segmentation on the thermal infrared image of the foreground in the target area, the visible light image of the foreground in the target area, and the depth image of the target area based on the third model and the fourth model, to accurately obtain the visible light image of the target device and the thermal infrared image of the target device.

In a possible implementation, the processing the visible light image of the target area and the thermal infrared image of the target area to obtain a visible light image of the target device and a thermal infrared image of the target device includes: segmenting the visible light image of the target area and the thermal infrared image of the target area to obtain a visible light image of a target sub-area and a thermal infrared image of the target sub-area, where the target sub-area is an area, in the target area, occupied by the target device and a part of another device; and performing secondary segmentation on the visible light image of the target sub-area and the thermal infrared image of the target sub-area to obtain the visible light image of the target device and the thermal infrared image of the target device. In the foregoing implementation, the instance segmentation includes first segmentation and secondary segmentation. After obtaining the depth image of the target area, the cloud server may perform first segmentation on the thermal infrared image of the target area and the visible light image of the target area based on the third model and by using the depth image of the target area, to obtain the thermal infrared image of the target sub-area and the visible light image of the target sub-area. After the visible light image of the target sub-area and the thermal infrared image of the target sub-area are obtained, because the target sub-area is an area occupied by the target device and the part of another device in the target area, the cloud server may further perform secondary segmentation on the visible light image of the target sub-area and the thermal infrared image of the target sub-area based on the fourth model, to accurately obtain the visible light image of the target device and the thermal infrared image of the target device.

In a possible implementation, the method further includes: obtaining a distance between the camera and the temperature abnormal area based on the visible light image of the target area and the thermal infrared image of the target area; and adjusting the temperature measurement result based on the distance between the camera and the temperature abnormal area and a preset correspondence, to obtain an adjusted temperature measurement result of the temperature abnormal area, where the preset correspondence indicates a correspondence between the distance and a temperature correction value. In the foregoing implementation, a preset correspondence is further set for the cloud server, and the preset correspondence indicates a correspondence between a distance and a temperature correction value. In this case, after obtaining the thermal infrared image of the temperature abnormal area, the cloud server may determine, based on the preset correspondence and the distance between the thermal imaging camera and the target device (the distance may be obtained from the depth image of the target area), the temperature correction value corresponding to the distance between the thermal imaging camera and the target device, and then adjust the thermal infrared image of the temperature abnormal area based on the temperature correction value, to obtain an adjusted thermal infrared image of the temperature abnormal area. In this way, the cloud server may use the visible light image of the temperature abnormal area and the adjusted thermal infrared image of the temperature abnormal area as an adjusted temperature measurement result of the temperature abnormal area in the target device, and feed back the adjusted temperature measurement result to the worker. It can be learned that, through temperature correction, the cloud server can make the adjusted thermal infrared image of the temperature abnormal area in the target device closer to an actual temperature of the temperature abnormal area in the target device. This helps improve accuracy of the temperature measurement result of the target device. In addition, because the depth image of the target area includes distances from all points in the target area to the camera, the cloud server may automatically obtain the distance between the camera and a temperature abnormal area in the target device based on the depth image of the target area, to determine a temperature correction value corresponding to the distance, and complete an adjustment for the temperature measurement result by using the temperature correction value. It can be learned that an entire temperature correction process may be automatically completed by the cloud server, and no operation needs to be performed by the worker. This can reduce manual operation costs.

In a possible implementation, the controlling a camera to photograph a target area to obtain a visible light image of the target area and a thermal infrared image of the target area includes: controlling the camera to photograph the target area at a preset position from a preset angle to obtain the visible light image of the target area and the thermal infrared image of the target area, where a distance between the camera at the position and the target device in the target area falls within a preset range, and when the camera photographs the target area from the angle, a degree of overlapping between the target device and another device is less than a preset threshold. In the foregoing implementation, in an inspection planning phase, the cloud server may select a preset position and a preset angle for the robot based on images of the target area that are photographed by the robot at different positions and at different angles and based on some conditions. These conditions include: When the robot is located at the position, the distance between the camera and the target device in the target area falls within the preset range, and when the robot controls the camera to photograph the target area from the angle, the degree of overlapping between the target device and the another device is less than the preset threshold. It can be learned that the cloud server may automatically plan an optimal position and angle for the robot based on the foregoing conditions, and factors considered are comprehensive. In this way, the robot can photograph an optimal image at the optimal position and angle in an inspection execution phase. In this case, efficiency is high, and accuracy of a temperature measurement result of the target device may be further improved.

In a possible implementation, the camera of the robot includes a light imaging camera and a thermal imaging camera.

A second aspect of embodiments of this application provides a device temperature measurement apparatus. The apparatus includes: a photographing module, configured to control a camera to photograph a target area, to obtain a visible light image of the target area and a thermal infrared image of the target area, where the target area includes a target device; a first processing module, configured to process the visible light image of the target area and the thermal infrared image of the target area to obtain a visible light image of the target device and a thermal infrared image of the target device; a second processing module, configured to process the visible light image of the target device and the thermal infrared image of the target device to obtain a thermal infrared image of a temperature abnormal area in the target device; and a determining module, configured to determine a temperature measurement result of the temperature abnormal area based on the thermal infrared image of the temperature abnormal area.

It can be learned from the foregoing apparatus that a robot controls, under an instruction of a worker, the camera to photograph a target area including the target device and another device to obtain a visible light image of the target area and a thermal infrared image of the target area, and sends the visible light image and the thermal infrared image to a cloud server. Then, the cloud server may process the visible light image of the target area and the thermal infrared image of the target area, to obtain a visible light image of the target device and a thermal infrared image of the target device. Then, the cloud server may continue to process the visible light image of the target device and the thermal infrared image of the target device, to obtain a thermal infrared image of the temperature abnormal area in the target device. Finally, the cloud server may determine a temperature measurement result of the temperature abnormal area in the target device based on the thermal infrared image of the temperature abnormal area, and report the temperature measurement result to the worker, so that the worker repairs the temperature abnormal area in the target device. In the foregoing process, after obtaining the visible light image and the thermal infrared image of the target area, the cloud server may remove a visible light image and a thermal infrared image of another device from the visible light image and the thermal infrared image of the target area, to obtain the visible light image and the thermal infrared image of the target device. Because the visible light image and the thermal infrared image of the target device present only the target device, in a process of analyzing these images, the cloud server is not affected by another device, and accurately determines the visible light image and the thermal infrared image of the temperature abnormal area in the target device, which is used as a temperature measurement result of the temperature abnormal area in the target device. It can be learned that the cloud server accurately determines the temperature abnormal area in the target device without generating a misjudgment. This effectively improves accuracy of the temperature measurement result of the target device.

In a possible implementation, the apparatus further includes a calculation module, configured to perform calculation on the thermal infrared image of the target area and the visible light image of the target area to obtain a depth image of the target area. The first processing module is configured to process the depth image of the target area, the visible light image of the target area, and the thermal infrared image of the target area to obtain the visible light image of the target device and the thermal infrared image of the target device.

In a possible implementation, the apparatus further includes a third processing module, configured to align the visible light image of the target area with the thermal infrared image of the target area to obtain an aligned visible light image of the target area. The calculation module is configured to perform calculation on the thermal infrared image and the aligned visible light image of the target area to obtain the depth image of the target area. The first processing module is configured to process the aligned visible light image of the target area, the thermal infrared image of the target area, and the depth image of the target area to obtain the visible light image of the target device and the thermal infrared image of the target device.

In a possible implementation, the apparatus further includes a fourth processing module, configured to determine a thermal infrared image of a foreground and a visible light image of the foreground in the target area from the thermal infrared image and the aligned visible light image of the target area based on the depth image of the target area, where the foreground includes the target device. The first processing module is configured to process the depth image of the target area, the thermal infrared image of the foreground, and the visible light image of the foreground to obtain the visible light image of the target device and the thermal infrared image of the target device.

In a possible implementation, the first processing module is configured to: segment the visible light image of the target area and the thermal infrared image of the target area to obtain a visible light image of a target sub-area and a thermal infrared image of the target sub-area, where the target sub-area is an area, in the target area, occupied by the target device and a part of another device; and perform secondary segmentation on the visible light image of the target sub-area and the thermal infrared image of the target sub-area to obtain the visible light image of the target device and the thermal infrared image of the target device.

In a possible implementation, the apparatus further includes: an obtaining module, configured to obtain a distance between the camera and the temperature abnormal area based on the visible light image of the target area and the thermal infrared image of the target area; and an adjustment module, configured to adjust the temperature measurement result based on the distance between the camera and the temperature abnormal area and a preset correspondence, to obtain an adjusted temperature measurement result of the temperature abnormal area, where the preset correspondence indicates a correspondence between the distance and a temperature correction value.

In a possible implementation, the photographing module is configured to control the camera to photograph the target area at a preset position from a preset angle to obtain the visible light image of the target area and the thermal infrared image of the target area; a distance between the camera at the position and the target device in the target area falls within a preset range; and when the camera photographs the target area from the angle, a degree of overlapping between the target device and the another device is less than a preset threshold.

In a possible implementation, the camera includes a light imaging camera and a thermal imaging camera.

A third aspect of embodiments of this application provides a device temperature measurement apparatus. The apparatus includes a memory and a processor. The memory stores code, and the processor is configured to execute the code. When the code is executed, the device temperature measurement apparatus performs the method according to any one of the first aspect or the possible implementations of the first aspect.

A fourth aspect of embodiments of this application provides a circuit system. The circuit system includes a processing circuit, and the processing circuit is configured to perform the method according to any one of the first aspect or the possible implementations of the first aspect.

A fifth aspect of embodiments of this application provides a chip system. The chip system includes a processor, configured to invoke a computer program or computer instructions stored in a memory, so that the processor performs the method according to any one of the first aspect or the possible implementations of the first aspect.

In a possible implementation, the processor is coupled to the memory through an interface.

In a possible implementation, the chip system further includes a memory. The memory stores a computer program or computer instructions.

A sixth aspect of embodiments of this application provides a computer storage medium. The computer storage medium stores a computer program. When the program is executed by a computer, the computer is enabled to perform the method according to any one of the first aspect or the possible implementations of the first aspect.

A seventh aspect of embodiments of this application provides a computer program product. The computer program product stores instructions, and when the instructions are executed by a computer, the computer is enabled to perform the method according to any one of the first aspect or the possible implementations of the first aspect.

In embodiments of this application, a robot controls, under an instruction of a worker, a camera to photograph a target area including a target device and another device to obtain a visible light image of the target area and a thermal infrared image of the target area, and sends the visible light image and the thermal infrared image to a cloud server. Then, the cloud server may process the visible light image of the target area and the thermal infrared image of the target area, to obtain a visible light image of the target device and a thermal infrared image of the target device. Then, the cloud server may continue to process the visible light image of the target device and the thermal infrared image of the target device, to obtain a thermal infrared image of a temperature abnormal area in the target device. Finally, the cloud server may determine a temperature measurement result of the temperature abnormal area in the target device based on the thermal infrared image of the temperature abnormal area, and report the temperature measurement result to the worker, so that the worker repairs the temperature abnormal area in the target device. In the foregoing process, after obtaining the visible light image and the thermal infrared image of the target area, the cloud server may remove a visible light image and a thermal infrared image of another device from the visible light image and the thermal infrared image of the target area, to obtain the visible light image and the thermal infrared image of the target device. Because the visible light image and the thermal infrared image of the target device present only the target device, in a process of analyzing these images, the cloud server is not affected by another device, and accurately determines the visible light image and the thermal infrared image of the temperature abnormal area in the target device, which is used as a temperature measurement result of the temperature abnormal area in the target device. It can be learned that the cloud server accurately determines the temperature abnormal area in the target device without generating a misjudgment. This effectively improves accuracy of the temperature measurement result of the target device.

**BRIEF DESCRIPTION OF DRAWINGS**

FIG. 1 is a diagram of a structure of an artificial intelligence main framework;

FIG. 2a is a diagram of a structure of a device temperature measurement system according to an embodiment of this application;

FIG. 2b is a diagram of another structure of a device temperature measurement system according to an embodiment of this application;

FIG. 2c is a diagram of a related device for device temperature measurement according to an embodiment of this application;

FIG. 3 is a diagram of an architecture of a system 100 according to an embodiment of this application;

FIG. 4 is a schematic flowchart of a device temperature measurement method according to an embodiment of this application;

FIG. 5 is a diagram of a structure of a calibration board according to an embodiment of this application;

FIG. 6a is a diagram of a calibration process according to an embodiment of this application;

FIG. 6b is another diagram of a calibration process according to an embodiment of this application;

FIG. 6c is another diagram of a calibration process according to an embodiment of this application;

FIG. 7 is a diagram of refined matching according to an embodiment of this application;

FIG. 8 is a diagram of a structure of a first model according to an embodiment of this application;

FIG. 9 is a diagram of a structure of a second model according to an embodiment of this application;

FIG. 10 is a diagram of a different-source binocular disparity according to an embodiment of this application;

FIG. 11 is a diagram of a structure of a third model according to an embodiment of this application;

FIG. 12 is a diagram of a structure of a fourth model according to an embodiment of this application;

FIG. 13 is a diagram of a structure of a fifth model according to an embodiment of this application;

FIG. 14 is a diagram of a structure of a device temperature measurement apparatus according to an embodiment of this application;

FIG. 15 is a diagram of a structure of an execution device according to an embodiment of this application;

FIG. 16 is a diagram of a structure of a training device according to an embodiment of this application; and

FIG. 17 is a diagram of a structure of a chip according to an embodiment of this application.

**DESCRIPTION OF EMBODIMENTS**

Embodiments of this application provide a device temperature measurement method and a related device thereof, to accurately determine a temperature abnormal area in a target device without generating a misjudgment. This effectively improves accuracy of a temperature measurement result of the target device.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is only a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device.

Preventive detection of an electric power equipment in an electrical substation is important for maintaining the electric power equipment, and measuring a temperature of the electric power equipment is also an important part of preventive detection. By measuring the temperature of the electric power equipment, a normal temperature area and a temperature abnormal area in the electric power equipment may be determined, and therefore whether the electric power equipment can work properly, that is, whether the electric power equipment is faulty, is determined.

Currently, during inspection, a robot in the electrical substation may photograph a thermal infrared image of an area including a target electric power equipment, and send the image to a remote cloud server for image analysis. The cloud server may determine, based on the image, a thermal infrared image of the target electric power equipment, namely, temperatures of all points of the target electric power equipment. Therefore, the cloud server may determine a temperature normal area and a temperature abnormal area in the target electric power equipment, use the temperature normal area and the temperature abnormal area as a temperature measurement result of the target electric power equipment, and notify the temperature measurement result to a worker of the electrical substation in time, so that the worker can repair the temperature abnormal area in the target electric power equipment.

However, electric power equipments in the electrical substation are dense, and the area may include not only the target electric power equipment, but also another electric power equipment. When analyzing the thermal infrared image of the area, the cloud server is easily affected by the another electric power equipment, mistakenly considers temperatures at some points near edges of the another electric power equipment as temperatures at some points in the target electric power equipment, and misjudges a temperature abnormal area in the target electric power equipment, resulting in low accuracy of the temperature measurement result of the target electric power equipment.

Further, in an inspection process of the robot, the worker usually needs to set a position for the robot, so that the robot docks at the position and photographs the area including the target electric power equipment. A factor that is often considered when a position is manually selected is single. As a result, the photographed thermal infrared image of the area is not an optimal image. This not only results in low efficiency, but also reduces accuracy of the temperature measurement result of the target electric power equipment.

Further, the robot obtains the thermal infrared image of the area by using a thermal imaging camera, and a temperature of any point in the image (namely, any pixel in the image) is obtained, through calculation, by the thermal imaging camera based on received radiant energy. Because the radiant energy is affected by a distance between the target electric power equipment and the camera, a deviation exists between a measured temperature of each point on the target electric power equipment and an actual temperature. This also reduces accuracy of the temperature measurement result of the target electric power equipment.

To resolve the foregoing problem, embodiments of this application provide a device temperature measurement method. The method may be implemented with reference to an artificial intelligence (artificial intelligence, AI) technology. The AI technology is a technical discipline that uses digital computers or machines controlled by digital computers to simulate, extend, and expand human intelligence. The AI technology obtains the best results by sensing an environment, obtaining knowledge, and using knowledge. In other words, the artificial intelligence technology is a branch of computer science, and seeks to learn essence of intelligence and produce a new intelligent machine that can react in a way similar to artificial intelligence. Using artificial intelligence to process data is a common application manner of artificial intelligence.

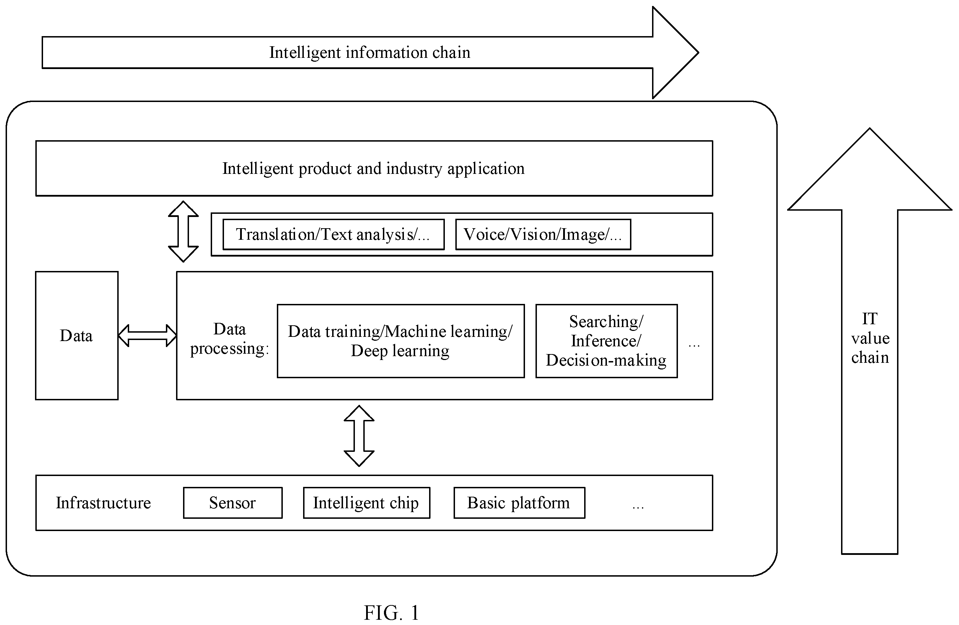

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip, for example, a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.
Machine learning and deep learning may mean performing symbolic and formal intelligent information modeling, extraction, preprocessing, training, and the like on data.
Inference is a process in which human intelligent inference is simulated in a computer or an intelligent system, and machine thinking and problem resolving are performed by using formal information according to an inference control. A typical function is searching and matching.
Decision-making is a process of making a decision after intelligent information is inferred, and usually provides functions such as classification, ranking, and prediction.

(4) General capability

After data processing mentioned above is performed on the data, some general capabilities may further be formed based on a data processing result. For example, the general capabilities may be an algorithm or a general system, for example, translation, text analysis, computer vision processing, speech recognition, and image recognition.

(5) Intelligent product and industry application

The intelligent product and industry application are a product and application of the artificial intelligence system in various fields, and are encapsulation for an overall solution of artificial intelligence, to productize intelligent information decision-making and implement application. Application fields of the intelligent information decision-making mainly include an intelligent terminal, intelligent transportation, intelligent healthcare, autonomous driving, a smart city, and the like.
The following describes several application scenarios of this application.

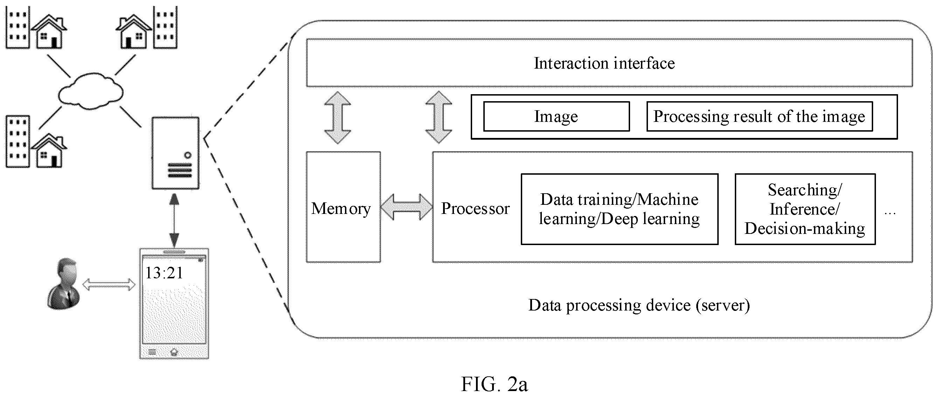

FIG. 2a is a diagram of a structure of a device temperature measurement system according to an embodiment of this application. The device temperature measurement system includes a user device and a data processing device. The user device includes an intelligent terminal, for example, a mobile phone, a personal computer, or a robot. The user device is an initiator of device temperature measurement, and is used as an initiator of a device temperature measurement request. Usually, a user initiates the request by using the user device.
The data processing device may be a device or a server that has a data processing function, for example, a cloud server, a network server, an application server, or a management server. The data processing device receives the device temperature measurement request from the intelligent terminal by using an interaction interface, and then performs text processing in manners such as machine learning, deep learning, searching, inference, and decision-making by using a memory that stores data and a processor that processes data. The memory in the data processing device may be a general name, and includes a local storage and a database that stores historical data. The database may be on the data processing device, or may be on another network server.
In the device temperature measurement system shown in FIG. 2a, the user device may receive an instruction from the user, and the user device may photograph, according to the instruction, the target device located in the target area, to obtain an image of the target area, and then initiate a temperature measurement request to the data processing device, so that the data processing device performs, based on the request, an image processing application for the image obtained by the user device, to obtain a processing result of the image. For example, the user device collects, under an instruction of the user, a visible light image of the target area and a thermal infrared image of the target area, and sends temperature measurement requests for these images to the data processing device, so that the data processing device performs a series of analysis processing on the visible light image of the target area and the thermal infrared image of the target area, to obtain an image processing result, namely, a temperature measurement result of the target device.

In FIG. 2a, the data processing device may perform the device temperature measurement method in embodiments of this application.

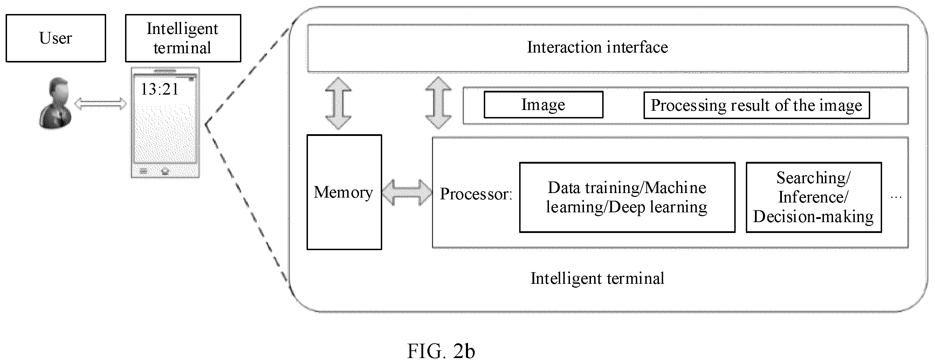

FIG. 2b is another diagram of a structure of a device temperature measurement system according to an embodiment of this application. In FIG. 2b, a user device is directly used as a data processing device, and the user device can obtain an image from a target area under an instruction of a user, and hardware of the user device directly performs an image processing application, a specific process is similar to that in FIG. 2a. Reference may be made to the foregoing description, and details are not described herein again.

In the device temperature measurement system shown in FIG. 2b, the user device collects, under an instruction of the user, a visible light image of a target area and a thermal infrared image of the target area, and performs a series of analysis processing on the visible light image of the target area and the thermal infrared image of the target area, in this way, a processing result of the image, namely, a temperature measurement result of the target device are obtained.

In FIG. 2b, the user device may perform the device temperature measurement method in embodiments of this application.

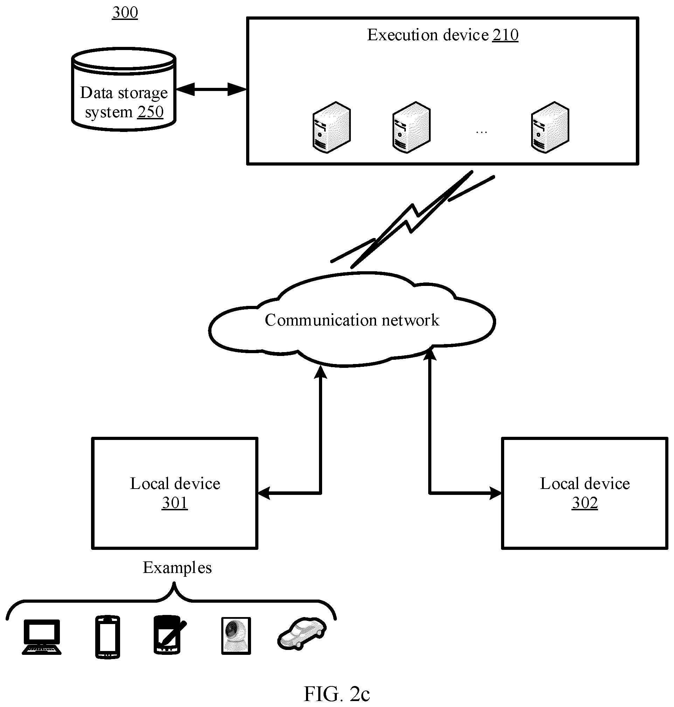

FIG. 2c is a diagram of a related device for device temperature measurement according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training/machine learning/deep learning by using a neural network model or another model (for example, a model based on a support vector machine), and perform an image processing application on an image by using a final model that is obtained through data training or learning, to obtain a corresponding processing result.

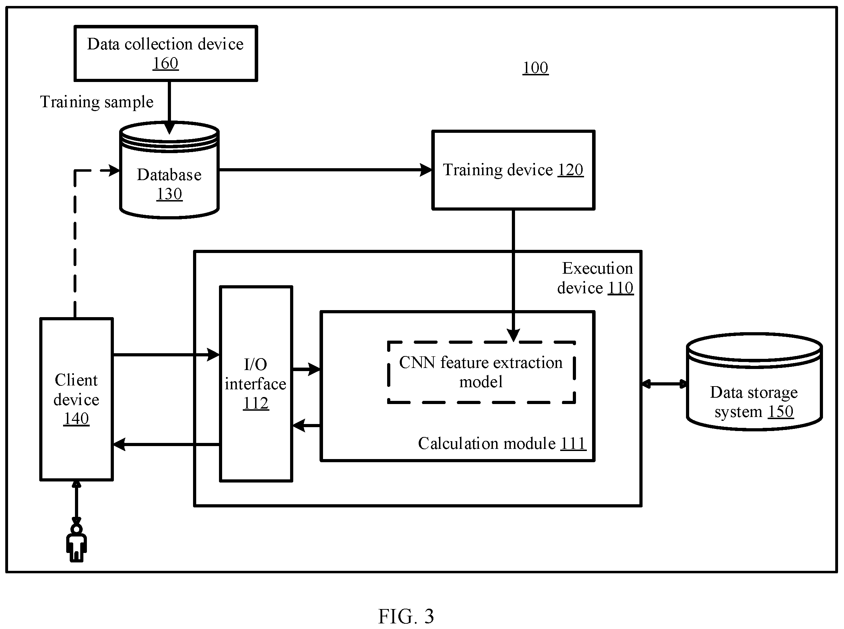

FIG. 3 is a diagram of an architecture of a system 100 according to an embodiment of this application. In FIG. 3, an input/output (input/output, I/O) interface 112 is configured for an execution device 110, to exchange data with an external device, a user may input data to the I/O interface 112 by using a client device 140. In this embodiment of this application, the input data may include a temperature measurement task, task data (including a to-be-processed visible light image and a to-be-processed thermal infrared image), and a task parameter.

In a process in which the execution device 110 preprocesses the input data, or in a process in which a calculation module 111 of the execution device 110 performs related processing such as computing (for example, performs function implementation of a neural network in this application), the execution device 110 may invoke data, code, and the like in a data storage system 150 for corresponding processing, and may also store, into the data storage system 150, data, instructions, and the like that are obtained through corresponding processing.

Finally, the I/O interface 112 presents a processing result to the client device 140, to provide the processing result to the user.

It should be noted that a training device 120 may generate corresponding target models/rules for different targets or referred to as different tasks based on different training data. The corresponding target models/rules may be used to implement the foregoing targets or complete the foregoing tasks, to provide a required result for the user. The training data may be stored in a database 130, and is derived from a training sample collected by a data collection device 160. In addition, the training device 120 and the execution device 110 may be different devices, or may be a same device (that is, the training device 120 is integrated into the execution device 110).

In a case shown in FIG. 3, the user may manually provide input data and the user may manually provide the input data in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is only a diagram of a system architecture according to an embodiment of this application. A position relationship between the devices, the components, the modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, and is configured to complete calculation work of the calculation module 111. The chip may alternatively be disposed in the training device 120 shown in FIG. 3, to complete training work of the training device 120 and output the target model/rule.

The neural-network process unit NPU is mounted to a host central processing unit (central processing unit, CPU) (host CPU) as a coprocessor, and the host CPU assigns a task. A core part of the NPU is an operation circuit, and a controller controls the operation circuit to extract data in a memory (a weight memory or an input memory) and perform an operation.

In some implementations, the operation circuit includes a plurality of processing units (process engine, PE) inside. In some implementations, the operation circuit is a two-dimensional systolic array. The operation circuit may be alternatively a one-dimensional systolic array or another electronic circuit that can perform mathematical operations such as multiplication and addition. In some implementations, the operation circuit is a general-purpose matrix processor.

For example, it is assumed that there is an input matrix A, a weight matrix B, and an output matrix C. The operation circuit fetches, from a weight memory, data corresponding to the matrix B, and buffers the data on each PE in the operation circuit. The operation circuit fetches data of the matrix A from an input memory, to perform a matrix operation with the matrix B, and stores an obtained partial result or an obtained final result of the matrix in an accumulator (accumulator).

A vector calculation unit may perform further processing such as vector multiplication, vector addition, an exponent operation, a logarithm operation, or value comparison on an output of the operation circuit. For example, the vector calculation unit may be configured to perform network calculation, such as pooling (pooling), batch normalization (batch normalization), or local response normalization (local response normalization) at a non-convolutional/non-FC layer in a neural network.

In some implementations, the vector calculation unit can store a processed output vector in a unified buffer. For example, the vector calculation unit may apply a nonlinear function to an output, for example, a vector of an accumulated value, of the operation circuit to generate an activation value. In some implementations, the vector calculation unit generates a normalized value, a combined value, or both a normalized value and a combined value. In some implementations, the processed output vector can be used as an activation input to the operation circuit, for example, the processed output vector can be used at a subsequent layer of the neural network.

A unified memory is configured to store input data and output data.

For weight data, a direct memory access controller (direct memory access controller, DMAC) directly transfers input data in an external memory to the input memory and/or the unified memory, stores weight data in the external memory into the weight memory, and stores data in the unified memory into the external memory.

A bus interface unit (bus interface unit, BIU) is configured to implement interaction between the host CPU, the DMAC, and an instruction fetch buffer through a bus.

The instruction fetch buffer (instruction fetch buffer) connected to the controller is configured to store instructions used by the controller.

The controller is configured to invoke the instructions buffered in the instruction fetch buffer, to control a working process of the operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural Network

The neural network may include a neuron. The neuron may be an operation unit that uses xs and an intercept of 1 as an input. An output of the operation unit may be as follows:

$$h_{W,b}(x) = f\left(W^T x\right) = f\left(\sum_{s=1}^{n} W_s x_s + b\right) \quad (1)$$

s = 1, 2, ..., or n, n is a natural number greater than 1, $W_s$ is a weight of $x_s$, and b is bias of the neuron. f is an activation function (activation function) of the neuron, and is used to introduce a non-linear characteristic into the neural network, to convert an input signal in the neuron to an output signal. The output signal of the activation function may be used as an input of a next convolutional layer. The activation function may be a sigmoid function. The neural network is a network formed by linking a plurality of single neurons together. To be specific, an output of one neuron may be an input of another neuron. An input of each neuron may be connected to a local receptive field of a previous layer to extract a feature of the local receptive field. The local receptive field may be an area including several neurons.

Work at each layer of the neural network may be described by using a mathematical expression $y = a(Wx + b)$. From a physical layer, work at each layer of the neural network may be understood as completing transformation from input space to output space (namely, from row space to column space of a matrix) by performing five operations on the input space (a set of input vectors). The five operations include: 1. dimension increasing/dimension reduction; 2. scaling up/scaling down; 3. rotation; 4. translation; and 5. "bending". The operations 1, 2, and 3 are performed by $Wx$, the operation of 4 is performed by $+b$, and the operation of 5 is performed by $a()$. The word "space" is used herein for expression because a classified object is not a single thing, but a type of thing. Space is a collection of all individuals of such type of things. $W$ is a weight vector, and each value in the vector indicates a weight value of one neuron at this layer of a neural network. The vector $W$ determines space transformation from the input space to the output space described above, to be specific, a weight $W$ of each layer controls how to transform space. The deep neural network is trained to finally obtain a weight matrix (a weight matrix including vectors $W$ of a plurality of layers) of all layers of the trained neural network. Therefore, a process of training the neural network is essentially a manner of learning control of space transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is the loss function (loss function) or an objective function (objective function). The loss function and the objective function are important equations that measure the difference between the predicted value and the target value. The loss function is used as an example. A higher output value (loss) of the loss function indicates a larger difference. In this case, training of the neural network is a process of minimizing the loss as much as possible.

(2) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an input signal is transferred forward until an error loss occurs at an output, and the parameter in the initial neural network model is updated based on back propagation error loss information, to make the error loss converge. The back propagation algorithm is a back propagation motion mainly dependent on the error loss, and aims to obtain parameters of an optimal neural network model, for example, a weight matrix.

The following describes the method provided in this application with reference to a training side of a neural network and an application side of the neural network.

The model training method provided in this embodiment of this application relates to data sequence processing, and may be specifically applied to methods such as data training, machine learning, and deep learning. Symbolic and formal intelligent information modeling, extraction, preprocessing, training, and the like are performed on training data, to finally obtain a trained neural network (for example, a first model, a second model, a third model, a fourth model, and a fifth model in this application). In addition, in the device temperature measurement method provided in this embodiment of this application, input data (for example, a visible light image of a target area and a thermal infrared image of the target area in this application) may be input into the trained neural network by using the foregoing trained neural network, to obtain output data (for example, a visible light image of a temperature abnormal area in the target device and a thermal infrared image of the temperature abnormal area in the target device in this application). It should be noted that the model training method and the device temperature measurement method provided in embodiments of this application are inventions generated based on a same idea, or may be understood as two parts in a system, or two phases, such as a model training phase and a model application phase, of an overall procedure.

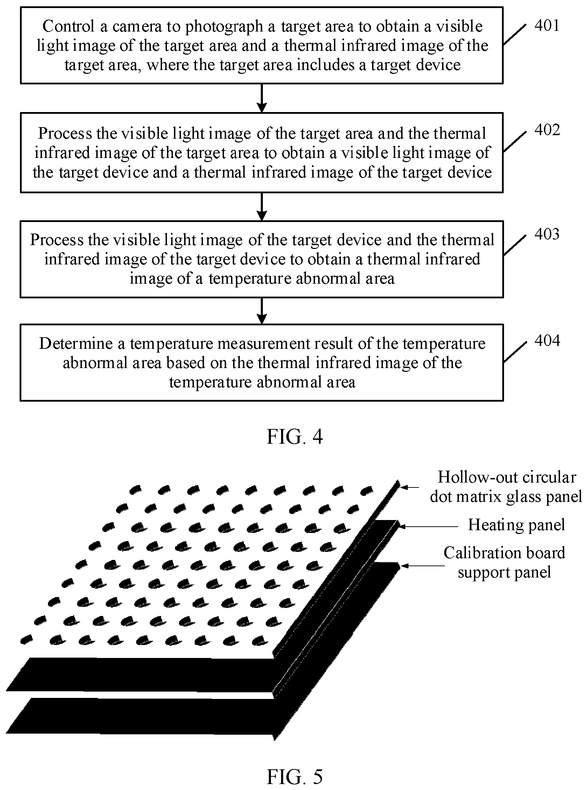

It should be noted that the device temperature measurement method provided in this embodiment of this application may be applied to a temperature measurement scenario of an electric power equipment. In this scenario, a worker of an electrical substation may enable a robot to perform inspection in the electrical substation. In a continuous driving process, the robot controls a camera to photograph the target area in which a target electric power equipment and another electric power equipment are located, and uploads the obtained visible light image and the thermal infrared image of the target area to a cloud server, so that the cloud server performs a series of processing on these images, obtains a temperature measurement result of the temperature abnormal area in the target electric power equipment, and feeds back the temperature measurement result to the worker; and the worker repairs the temperature abnormal area in the target electric power equipment in the electrical substation, maintaining a normal working status of the electrical substation. FIG. 4 is a schematic flowchart of a device temperature measurement method according to an embodiment of this application. As shown in FIG. 4, the method includes the following steps.

401: Control a camera to photograph a target area, to obtain a visible light image of the target area and a thermal infrared image of the target area, where the target area includes a target device.

In this embodiment, a worker delivers an instruction to a robot, and the robot may determine, according to the instruction, an inspection task that needs to be completed, that is, complete temperature measurement for the target device. In this case, in an inspection execution phase (namely, a phase of executing the inspection task), the robot may control the camera to photograph the target area in which the target device is located, to obtain the visible light image of the target area and the thermal infrared image of the target area. It may be understood that the target area usually means an area within a specified range. The area includes the target device and an area device. The visible light image of the target area includes original information (that is, a color, texture, and the like of each point) of each point in the target area, and the thermal infrared image of the target area includes temperature information of each point (that is, a temperature of each point) in the target area.

Specifically, the camera disposed on the robot may include a light imaging camera and a thermal imaging camera, and the light imaging camera and the thermal imaging camera are disposed side by side on a pan-tilt-zoom of the robot. The pan-tilt-zoom may rotate 360 degrees under control of the robot. In this case, in a continuous driving process, the robot may control the light imaging camera to photograph the target area, to obtain the visible light image of the target area, and control the thermal imaging camera to photograph the target area, to obtain the thermal infrared image of the target area.

More specifically, the robot may photograph the target area in the following manner, to obtain the visible light image of the target area and the thermal infrared image of the target area:

(1) In the continuous driving process, when the robot reaches a preset position (without stopping), the robot may immediately control, at this moment, the camera to photograph the target area from a preset angle, to obtain the visible light image of the target area and the thermal infrared image of the target area. It should be noted that the preset position and the preset angle each are determined in advance in an inspection planning phase. Therefore, the position determined in advance should meet the following conditions: When the robot is located at the position, a distance between the camera of the robot and the target device in the target area is within a preset range (values of left and right ends of the range may be set based on an actual requirement, and are not limited herein). The angle determined in advance meets the following conditions: When the camera of the robot photographs the target area from the angle, in a presented photographing field of view, a degree of overlapping between the target device in the target area and another device in the target area is less than a preset overlapping degree threshold (a value of the threshold may be set based on an actual requirement, and is not limited herein).

It should be noted that the inspection planning phase is before the inspection execution phase, and the inspection planning phase is similar to the inspection execution phase. Therefore, for a process in which the robot completes the inspection planning phase, refer to a process in which the robot completes the inspection execution phase (that is, refer to step 401, step 402, and the like). Details are not described herein again.

(2) In the continuous driving process, each time the robot reaches a position, the robot selects an angle and immediately determines, at this moment, that the position meets the following conditions: When the robot is located at the position, a distance between the camera of the robot and the target device in the target area is within a preset range, and determines whether an angle meets the following condition: When the camera of the robot photographs the target area from the angle, in a presented photographing field of view, a degree of overlapping between the target device in the target area and another device in the target area is less than a preset threshold. If the two conditions are met, the robot controls, at the position, the camera to photograph the target area from the angle, to obtain the visible light image of the target area and the thermal infrared image of the target area. If either of the two conditions is not met, the robot performs the foregoing process again at a next position based on a next angle until the visible light image of the target area and the thermal infrared image of the target area are successfully captured.

402: Process the visible light image of the target area and the thermal infrared image of the target area to obtain a visible light image of the target device and a thermal infrared image of the target device.

After obtaining the visible light image of the target area and the thermal infrared image of the target area, the robot may send the visible light image of the target area and the thermal infrared image of the target area to a cloud server. The cloud server may remove, from the visible light image of the target area and the thermal infrared image of the target area, a visible light image of an area that is other than the target device and that is in the target area and the thermal infrared image of the area that is other than the target device and that is in the target area, to obtain the visible light image of the target device and the thermal infrared image of the target device. It may be understood that the visible light image of the target area presents the entire target area, the thermal infrared image of the target area presents the entire target area, the visible light image of the target device presents only the target device, and the thermal infrared image of the target device presents only the target device.

Specifically, the cloud server may obtain the visible light image of the target device and the thermal infrared image of the target device in the following manner. The process includes:

(1) After the visible light image of the target area and the thermal infrared image of the target area are obtained, because a field of view of the light imaging camera is usually larger than a field of view of the thermal imaging camera, a size of the visible light image of the target area is greater than a size of the thermal infrared image of the target area, that is, content presented by the former is more than content presented by the latter. To make content presented by the former and the latter be the same and aligned as much as possible, the cloud server may align the visible light image of the target area with the thermal infrared image of the target area, to obtain an aligned visible light image of the target area. It should be noted that the alignment process includes two phases: initial matching (rough matching) and secondary matching (refined matching). The following separately describes the two phases.

(1.1) Initial matching phase: After obtaining the visible light image of the target area and the thermal infrared image of the target area, the cloud server may crop the visible light image of the target area based on a content matching relationship between the visible light image and the thermal infrared image, so that a size of a visible light image that is obtained through cropping and that is of the target area is approximately similar to the size of the thermal infrared image of the target area (generally, the size of the visible light image that is obtained through cropping and that is of the target area is slightly greater than the size of the thermal infrared image of the target area). In this case, content presented by the visible light image that is obtained through cropping and that is of the target area is approximately similar to content presented by the thermal infrared image of the target area (generally, content presented by the visible light image that is obtained through cropping and that is of the target area is slightly more than content presented by the thermal infrared image of the target area).

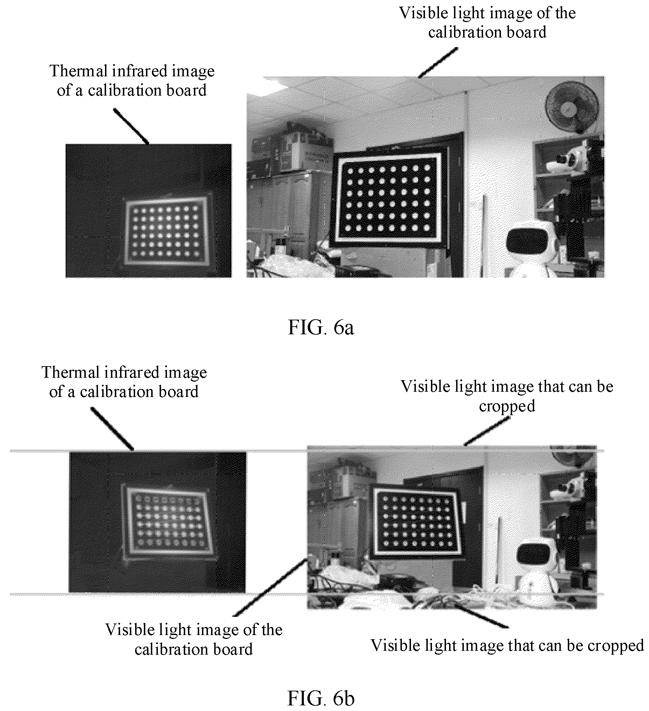

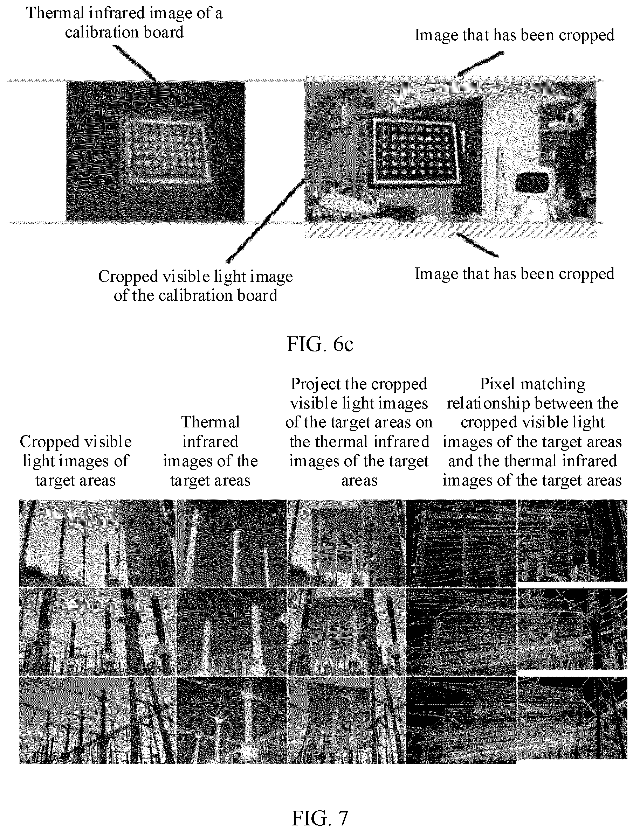

It should be noted that the correspondence between the visible light image and the thermal infrared image is determined in advance in the inspection planning phase. As shown in FIG. 5 (FIG. 5 is a diagram of a structure of a calibration board according to this embodiment of this application), in the inspection planning phase, a worker may hold the calibration board. The calibration board includes a calibration board support panel, a heating panel, and a hollow-out circular dot matrix glass panel that are sequentially stacked, the hollow-out circular dot matrix glass panel is located on a top layer, the calibration board support panel is located on a bottom layer, and the heating panel located in a middle layer may be heated by using a temperature controller. The worker can control the robot to photograph the calibration board by using the camera, to obtain a visible light image of the calibration board and a thermal infrared image of the calibration board, and upload the visible light image and the thermal infrared image to the cloud server. As shown in FIG. 6a, FIG. 6b, and FIG. 6c (FIG. 6a is a diagram of a calibration process according to an embodiment of this application, FIG. 6b is another diagram of a calibration process according to an embodiment of this application, and FIG. 6c is another diagram of a calibration process according to an embodiment of this application), because a surface of the calibration board has a hollow-out circular matrix (including a plurality of hollow-out circular points), the cloud server may determine positions of the plurality of hollow-out circular points in the visible light image of the calibration board and positions of the plurality of hollow-out circular points in the thermal infrared image of the calibration board, and determine, based on positions of the plurality of hollow-out circular points in the two images, that a specific part of image in the visible light image of the calibration board cannot find a matched image in the thermal infrared image of the calibration board (that is, content presented by the part of image in the visible light image does not appear in the content presented by the thermal infrared image). The part of image in the visible light image of the calibration board may be cropped, to obtain a visible light image that is obtained through cropping and that is of the calibration board. In this way, the cloud server may record a position of the part of image that has been cropped in the visible light image of the calibration board, and position information may be considered as a content matching relationship between the visible light image and the thermal infrared image.

(1.2) Second matching phase: After obtaining the visible light image that is obtained through cropping and that is of the target area, the cloud server may input the visible light image that is obtained through cropping and that is of the target area and the thermal infrared image of the target area into the first model. As shown in FIG. 7 (FIG. 7 is a diagram of refined matching according to an embodiment of this application), distances between a pixel in the visible light image that is obtained through cropping and that is of the target area and all pixels in the thermal infrared image of the target area are calculated by using the first model, and a pixel with a shortest distance in the thermal infrared image is used as a pixel that matches the pixel in the visible light image. For some other pixels in the visible light image that is obtained through cropping and that is of the target area, the first model may also perform an operation similar to that performed on the pixels. Therefore, the first model may obtain a pixel matching relationship between the visible light image that is obtained through cropping and that is of the target area and the thermal infrared image of the target area. Based on the pixel matching relationship, all pixels of the visible light image that is obtained through cropping and that is of the target area may be matched to all pixels of the thermal infrared image of the target area by using the first model, that is, the visible light image that is obtained through cropping and that is of the target area may be accurately projected onto the thermal infrared image of the target area, the visible light image on which projection is completed is the aligned visible light image of the target area.

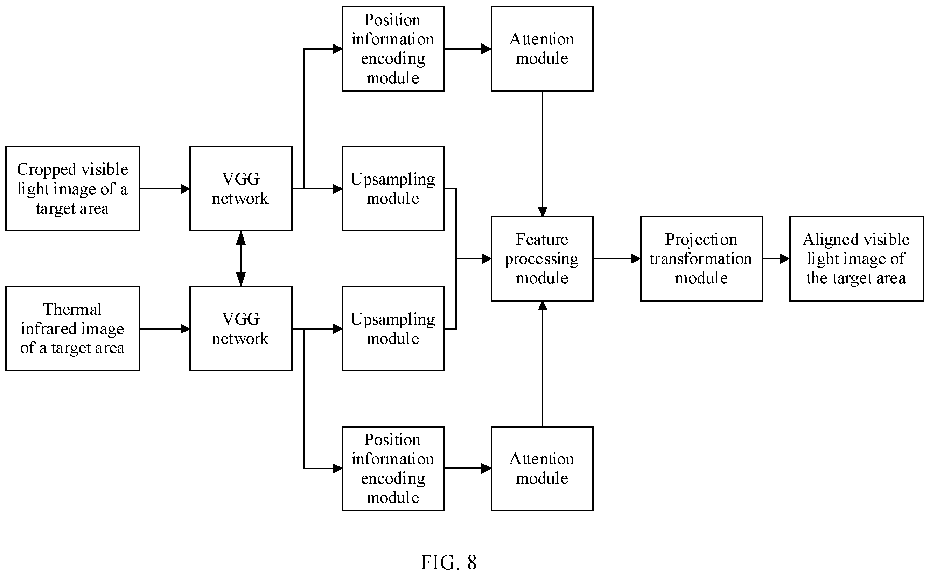

It should be noted that the foregoing first model is a trained neural network model, and a structure of the first model is shown in FIG. 8 (FIG. 8 is a diagram of a structure of a first model according to an embodiment of this application). The first model includes: a VGG network module, a position information encoding module, an attention module, an upsampling module, a feature processing module, and a projection transformation module.

It should be further noted that, to obtain the first model through training, the cloud server may first obtain a first to-be-trained model (namely, a neural network model that needs to be trained) and a batch of training data (including a visible light image that is obtained through cropping and that is of an area and a thermal infrared image of the area), and a real processing result of the training data (namely, an aligned real visible light image of the area). Then, the cloud server may input the training data into the first to-be-trained model, so that the training data is processed by using the first to-be-trained model, to obtain an estimated processing result of the training data (namely, an aligned estimated visible light image of the area). Then, the cloud server may calculate the real processing result of the training data and the estimated processing result of the training data according to a preset first loss function, to obtain a target loss. The target loss indicates a difference between the real processing result of the training data and the estimated processing result of the training data. Finally, the cloud server may update a parameter of the first to-be-trained model based on the target loss, and continue to train, through a next batch of training data, the first to-be-trained model whose parameter is updated, until a model training condition (for example, target loss convergence) is met, to obtain the first model.

(2) After obtaining the aligned visible light image of the target area, the cloud server further performs calculation on the thermal infrared image and the aligned visible light image of the target area, to obtain a depth image of the target area, where the depth image of the target area includes depth information of each point (namely, a depth of each point, and the like) in the target area. The calculation process includes the following steps.

(2.1) After obtaining the aligned visible light image of the target area, the cloud server may convert the aligned visible light image of the target area into a pseudo infrared image of the target area, and input the pseudo infrared image of the target area and the thermal infrared image of the target area into the second model, and may perform a series of calculation on these images by using the second model, to obtain a disparity map. The disparity map includes a disparity between each pixel in the pseudo infrared image and a corresponding pixel in the thermal infrared image.

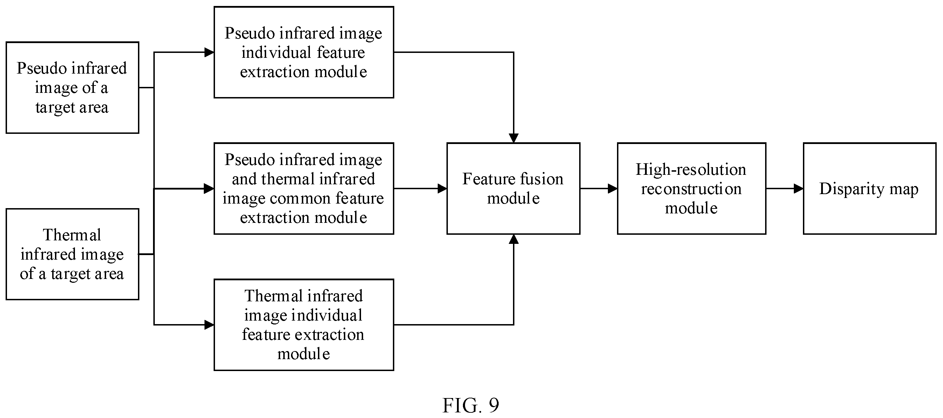

It should be noted that the foregoing second model is a trained neural network model, and a structure of the second model is shown in FIG. 9 (FIG. 9 is a diagram of a structure of a second model according to an embodiment of this application). The second model may include: a pseudo infrared image individual feature extraction module, a pseudo infrared image and thermal infrared image common feature extraction module, a thermal infrared image individual feature extraction module, a feature fusion module, and a high-resolution reconstruction module.

It should be further noted that, to obtain the second model through training, the cloud server may first obtain a second to-be-trained model (namely, a neural network model that needs to be trained), a batch of training data (including a pseudo infrared image of an area and a thermal infrared image of the area) and a real processing result (namely, a real disparity map) of the training data. Then, the cloud server may input the training data into the second to-be-trained model, to process the training data by using the second to-be-trained model, to obtain an estimated processing result (namely, an estimated disparity map) of the training data. Then, the cloud server may calculate the real processing result of the training data and the estimated processing result of the training data according to a preset second loss function, to obtain a target loss. The target loss indicates a difference between the real processing result of the training data and the estimated processing result of the training data. Finally, the cloud server may update a parameter of the second to-be-trained model based on the target loss, and continue to train, through a next batch of training data, the second to-be-trained model whose parameter is updated, until a model training condition (for example, target loss convergence) is met, to obtain the second model.

(2.2) After the disparity map is obtained, for any pixel in the pseudo-infrared image, the cloud server may calculate coordinates of the pixel in the pseudo-infrared image and a disparity between the pixel in the pseudo-infrared image and a corresponding pixel in the thermal infrared image, in this way, coordinates of corresponding pixels in the thermal infrared image are obtained. Then, the cloud server may calculate inner and outer parameters of the camera, the coordinates of the pixel, and the coordinates of the corresponding pixel, to determine the depth corresponding to the pixel. For other pixels of the pseudo-infrared image, the cloud server may also perform an operation similar to that performed on the pixel, to obtain depths corresponding to all pixels of the pseudo-infrared image, that is, depths of all points in the target area, depths of all points in the target area form a depth image of the target area.

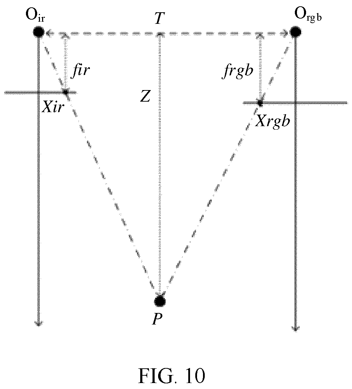

For example, as shown in FIG. 10 (FIG. 10 is a diagram of a different-source binocular disparity according to an embodiment of this application), the cloud server may obtain coordinates Oir of an optical center of the light imaging camera and coordinates Orgb of an optical center of the thermal imaging camera, a difference between the two optical center coordinates is T, a focal length of the light imaging camera is fir, and a focal length of the thermal imaging camera is frgb. For a pixel in the pseudo infrared image of the target area, it is assumed that coordinates of the pixel are Xrgb, and coordinates of a corresponding pixel of the pixel in the thermal infrared image of the target area are Xir, a difference between Xrgb and Xir is a disparity between the pixel in the pseudo infrared image and the corresponding pixel in the thermal infrared image. In this case, a depth Z corresponding to the pixel may be calculated according to the following formula:

$$\begin{cases} \dfrac{T-(x_{ir}-x_{rgb}\bullet\dfrac{f_{ir}}{f_{rgb}})}{T}=\dfrac{Z-f_{ir}}{Z} \quad Z=\dfrac{T\bullet f_{ir}}{x_{ir}-x_{rgb}\dfrac{f_{ir}}{f_{rgb}}} \\[4ex] Z\bullet\left[T-(x_{ir}-x_{rgb}\bullet\dfrac{f_{ir}}{f_{rgb}})\right]=T\bullet[Z-f_{ir}] \\[4ex] Z\bullet T-Z\bullet(x_{ir}-x_{rgb}\bullet\dfrac{f_{ir}}{f_{rgb}})=Z\bullet T-Tf_{ir} \\[4ex] Z=\dfrac{T\bullet f_{ir}}{x_{ir}-x_{rgb}\dfrac{f_{ir}}{f_{rgb}}} \end{cases} \qquad (2)$$

In this way, depths corresponding to all pixels may be calculated, to obtain the depth image of the target area.

(3) After obtaining the depth image of the target area, the cloud server may determine, in the thermal infrared image of the target area and the aligned visible light image of the target area, the thermal infrared image of the foreground in the target area and the visible light image of the foreground in the target area based on the depth image of the target area. The visible light image of the foreground in the target area presents only the foreground of the target area, the thermal infrared image of the foreground in the target area presents only the foreground of the target area, and the foreground of the target area includes the target device and another device, and the background of the target area is an environment (for example, a distant sky or a mountain peak) in which the target device is located. The determining process includes: After obtaining the depth image of the target area, the cloud server may determine, based on the depth image of the target area, depths corresponding to all pixels in the thermal infrared image of the target area and depths corresponding to all pixels in the aligned visible light image of the target area. In the thermal infrared image of the target area, the cloud server may remove a pixel whose depth is greater than a preset depth threshold (a value of the threshold may be set based on an actual requirement, and is not limited herein). This is equivalent to removing the thermal infrared image of the background in the target area, and retaining the thermal infrared image of the foreground in the target area. Similarly, in the visible light image of the target area, the cloud server may remove a pixel whose depth is greater than the preset depth threshold. This is equivalent to removing the visible light image of the background in the target area, and retaining the visible light image of the foreground in the target area.

(4) After obtaining the depth image of the target area, the cloud server may segment the thermal infrared image of the foreground in the target area and the visible light image of the foreground in the target area based on the depth image of the target area, to obtain a visible light image of the target sub-area and a thermal infrared image of the target sub-area. The target sub-area (which may also be referred to as a target detection box) is an area, in the target area, occupied by the target device and a part of another device. The segmentation process includes:

After obtaining the depth image of the target area, the cloud server may input the depth image of the target area, the thermal infrared image of the foreground in the target area, and the visible light image of the foreground in the target area into the third model, so that the third model removes, from the thermal infrared image of the foreground in the target area based on the depth image of the target area, a thermal infrared image that is of the foreground and that is in an area other than the target sub-area, to retain the thermal infrared image of the target sub-area. Similarly, the third model may further remove, from the visible light image of the foreground in the target area, a visible light image that is of the foreground and that is in an area other than the target sub-area, to retain the visible light image of the target sub-area.

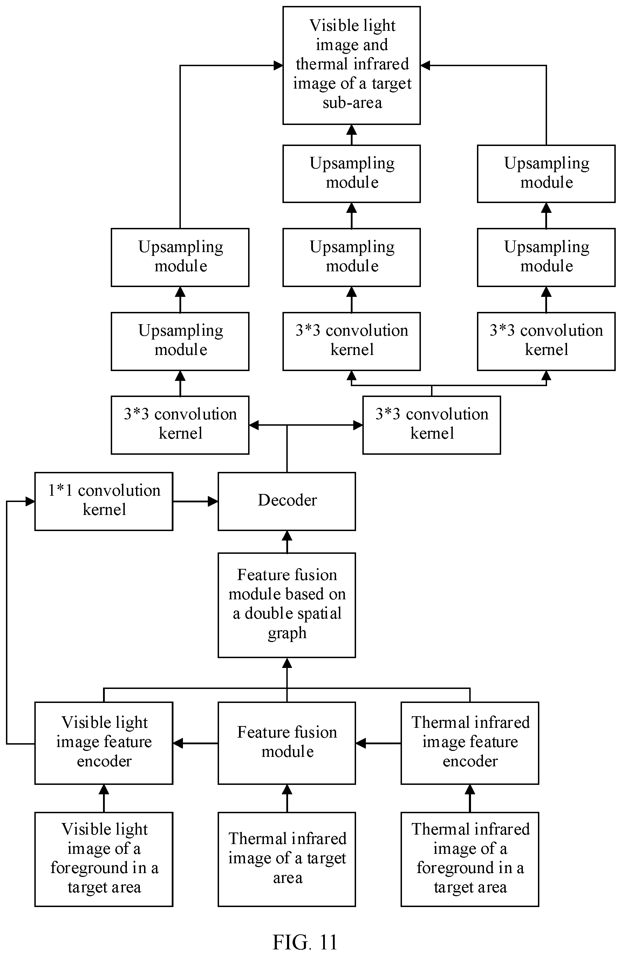

It should be noted that the foregoing third model is a trained neural network model, and a structure of the third model is shown in FIG. 11 (FIG. 11 is a diagram of a structure of a third model according to an embodiment of this application). The third model may include: a visible light image feature encoder, a thermal infrared image feature encoder, a feature fusion module, a feature fusion module based on a double spatial graph, a decoder, a convolution kernel (a 1*1 convolution kernel, a 3*3 convolution kernel, and the like), and an upsampling module.

It should be further noted that, to obtain the third model through training, the cloud server may first obtain a third to-be-trained model (namely, a neural network model that needs to be trained) and a batch of training data (including a depth image of an area, a thermal infrared image of a foreground in the area, and a visible light image of a foreground in the area), and a real processing result of the training data (namely, a real visible light image and a real thermal infrared image of a detection box). Then, the cloud server may input the training data into the third to-be-trained model, to process the training data by using the third to-be-trained model, to obtain an estimated processing result of the training data (namely, an estimated visible light image and an estimated thermal infrared image of the detection box). Then, the cloud server may calculate the real processing result of the training data and the estimated processing result of the training data according to a preset third loss function, to obtain a target loss. The target loss indicates a difference between the real processing result of the training data and the estimated processing result of the training data. Finally, the cloud server may update a parameter of the third to-be-trained model based on the target loss, and continue to train, through a next batch of training data, the third to-be-trained model whose parameter is updated, until a model training condition (for example, target loss convergence) is met, to obtain the third model.

(5) After obtaining the visible light image of the target sub-area and the thermal infrared image of the target sub-area, the cloud server may perform secondary segmentation on the visible light image of the target sub-area and the thermal infrared image of the target sub-area, to obtain the visible light image of the target device and the thermal infrared image of the target device. The secondary segmentation process includes:

(5.1) After obtaining the visible light image of the target sub-area and the thermal infrared image of the target sub-area, the cloud server may determine, based on the thermal infrared image of the target sub-area, a temperature corresponding to each pixel in the visible light image of the target sub-area. Because the cloud server has determined a device type of the target device, a temperature range of the type of target device may be obtained. Then, the cloud server may remove, from the visible light image of the target sub-area, a pixel whose temperature is beyond the temperature range. It is equivalent to that some visible light images of a part of another device are removed from the target sub-area, to retain some visible light images of other parts of the another device and the visible light image of the target device. The retained part of the visible light image may be referred to as a visible light image of an optimized sub-area (that is, an optimized detection box). Similarly, the cloud server may remove, from the thermal infrared image of the target sub-area, a pixel whose temperature is beyond the temperature range. It is equivalent to that some thermal infrared images of a part of another device are removed from the target sub-area, to retain some thermal infrared images of other parts of the another device and the thermal infrared image of the target device. The retained part of the thermal infrared image may be referred to as a thermal infrared image of an optimized sub-area.

(5.2) After obtaining the visible light image of the optimized sub-area and the thermal infrared image of the optimized sub-area, the cloud server may input the visible light image of the optimized sub-area and the thermal infrared image of the optimized sub-area into the fourth model, so that the fourth model removes, from the visible light image of the optimized sub-area, some visible light images of other parts of the another device, to retain the visible light image of the target device. Similarly, the fourth model may further remove, from the thermal infrared image of the optimized sub-area, some thermal infrared images of other parts of the another device, to retain the thermal infrared image of the target device.

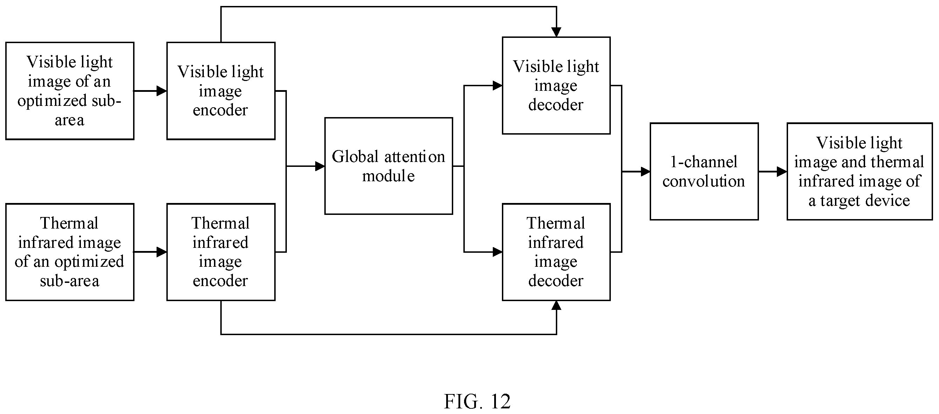

It should be noted that the fourth model is a trained neural network model, and a structure of the fourth model is shown in FIG. 12 (FIG. 12 is a diagram of a structure of a fourth model according to an embodiment of this application). The fourth model may include: a visible light image encoder, a thermal infrared image encoder, a global attention module, a visible light image decoder, a thermal infrared image decoder, and a convolution module (1-channel convolution).

It should be further noted that, to obtain the fourth model through training, the cloud server may first obtain a fourth to-be-trained model (namely, a neural network model that needs to be trained) and a batch of training data (including a thermal infrared image of a detection box and a visible light image of the detection box), and a real processing result of the training data (namely, a real visible light image and a real thermal infrared image of a device). Then, the cloud server may input the training data into the fourth to-be-trained model, to process the training data by using the fourth to-be-trained model, to obtain an estimated processing result of the training data (namely, an estimated visible light image and an estimated thermal infrared image of the device). Then, the cloud server may calculate the real processing result of the training data and the estimated processing result of the training data according to a preset fourth loss function, to obtain a target loss. The target loss indicates a difference between the real processing result of the training data and the estimated processing result of the training data. Finally, the cloud server may update a parameter of the fourth to-be-trained model based on the target loss, and continue to train, through a next batch of training data, the fourth to-be-trained model whose parameter is updated, until a model training condition (for example, target loss convergence) is met, to obtain the fourth model.

It should be understood that in the foregoing step (1) to step (5), the cloud server may perform all steps, or may selectively perform some of the steps. For example, the cloud server may perform only step (1), step (2), step (4), and step (5), that is, the cloud server first aligns the visible light image of the target area with the thermal infrared image of the target area, to obtain the aligned visible light image of the target area. Then, the cloud server performs calculation on the thermal infrared image and the aligned visible light image of the target area, to obtain the depth image of the target area. Then, the cloud server may segment the visible light image of the target area and the thermal infrared image of the target area based on the depth image of the target area, to obtain the visible light image of the target sub-area and the thermal infrared image of the target sub-area. The target sub-area is an area, in the target area, occupied by the target device and a part of another device. Finally, the cloud server performs secondary segmentation on the visible light image of the target sub-area and the thermal infrared image of the target sub-area to obtain the visible light image of the target device and the thermal infrared image of the target device.

403: Process the visible light image of the target device and the thermal infrared image of the target device to obtain a thermal infrared image of a temperature abnormal area in the target device.

After obtaining the visible light image of the target device and the thermal infrared image of the target device, the cloud server may determine, from the visible light image of the target device and the thermal infrared image of the target device, a visible light image of a temperature abnormal area and a thermal infrared image of the temperature abnormal area in the target device. It may be understood that the visible light image of the temperature abnormal area in the target device presents only the temperature abnormal area, and the thermal infrared image of the temperature abnormal area presents only the temperature abnormal area.

The removal process includes: After obtaining the visible light image of the target device and the thermal infrared image of the target device, the cloud server may input the visible light image of the target device and the thermal infrared image of the target device into a fifth model, so that the fifth model removes, from the visible light image of the target device, a visible light image of a temperature normal area in the target device, to retain the visible light image of the temperature abnormal area in the target device. Similarly, the fifth model may further remove, from the thermal infrared image of the target device, a thermal infrared image of the temperature normal area, to retain the thermal infrared image of the temperature abnormal area.

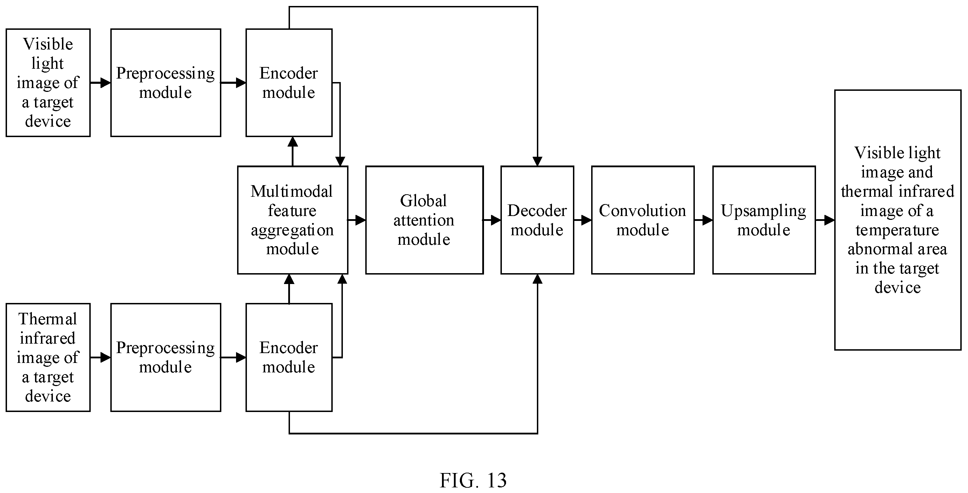

It should be noted that the fifth model is a trained neural network model, and a structure of the fifth model is shown in FIG. 13 (FIG. 13 is a diagram of a structure of the fifth model according to an embodiment of this application). The fifth model may include: a preprocessing module, an encoder module, a multimodal feature aggregation module, a global attention module, a decoder module, a convolution module, and an upsampling module.

It should be further noted that, to obtain the fifth model through training, the cloud server may first obtain a fifth to-be-trained model (namely, a neural network model that needs to be trained) and a batch of training data (including a thermal infrared image of a device and a visible light image of the device), and a real processing result of the training data (namely, a real visible light image and a real thermal infrared image of a temperature abnormal area in the device). Then, the cloud server may input the training data into the fifth to-be-trained model, to process the training data by using the fifth to-be-trained model, to obtain an estimated processing result of the training data (namely, an estimated visible light image and an estimated thermal infrared image of the temperature abnormal area in the device). Then, the cloud server may calculate the real processing result of the training data and the estimated processing result of the training data according to a preset fifth loss function, to obtain a target loss. The target loss indicates a difference between the real processing result of the training data and the estimated processing result of the training data. Finally, the cloud server may update a parameter of the fifth to-be-trained model based on the target loss, and continue to train, through a next batch of training data, the fifth to-be-trained model whose parameter is updated, until a model training condition (for example, target loss convergence) is met, to obtain the fifth model.

404: Determine a temperature measurement result of the temperature abnormal area based on the thermal infrared image of the temperature abnormal area.

After obtaining the visible light image and the thermal infrared image of the temperature abnormal area in the target device, the cloud server may directly use the visible light image of the temperature abnormal area and the thermal infrared image of the temperature abnormal area as a temperature measurement result of the temperature abnormal area in the target device, and feed back the temperature measurement result to the worker, so that the worker finds the temperature abnormal area in the target device based on the temperature measurement result, and repairs the temperature abnormal area in the target device.

Further, because the thermal imaging camera of the robot is at a specific distance from the target device in the target area, the thermal infrared image that is of the temperature abnormal area in the target device and that is collected by the thermal imaging camera cannot accurately indicate an actual temperature of the temperature abnormal area, therefore, it is necessary to correct the temperature of the thermal infrared image in the temperature abnormal area. Specifically, a preset correspondence is further set for the cloud server, and the preset correspondence indicates a correspondence between a distance and a temperature correction value. In this case, after obtaining the thermal infrared image of the temperature abnormal area, the cloud server may first obtain, from the depth image of the target area, the distance (including the distance between the thermal imaging camera and the temperature abnormal area in the target device) between the thermal imaging camera and the target device; determine, based on the preset correspondence and the distance between the thermal imaging camera and the target device, the temperature correction value corresponding to the distance between the thermal imaging camera and the target device; and then adjust the thermal infrared image of the temperature abnormal area based on the temperature correction value (for example, the temperature correction value is superimposed on the thermal infrared image of the temperature abnormal area), to obtain an adjusted thermal infrared image of the temperature abnormal area. In this way, the cloud server may use the visible light image of the temperature abnormal area and the adjusted thermal infrared image of the temperature abnormal area as an adjusted temperature measurement result of the temperature abnormal area in the target device, and feed back the adjusted temperature measurement result to the worker.

In this embodiment of this application, a robot controls, under an instruction of the worker, the camera to photograph a target area including the target device and another device to obtain a visible light image of the target area and a thermal infrared image of the target area, and sends the visible light image and the thermal infrared image to the cloud server. Then, the cloud server may process the visible light image of the target area and the thermal infrared image of the target area, to obtain a visible light image of the target device and a thermal infrared image of the target device. Then, the cloud server may continue to process the visible light image of the target device and the thermal infrared image of the target device, to obtain the thermal infrared image of the temperature abnormal area in the target device. Finally, the cloud server may determine a temperature measurement result of the temperature abnormal area in the target device based on the thermal infrared image of the temperature abnormal area, and report the temperature measurement result to the worker, so that the worker repairs the temperature abnormal area in the target device. In the foregoing process, after obtaining the visible light image and the thermal infrared image of the target area, the cloud server may remove a visible light image and a thermal infrared image of another device from the visible light image and the thermal infrared image of the target area, to obtain the visible light image and the thermal infrared image of the target device. Because the visible light image and the thermal infrared image of the target device present only the target device, in a process of analyzing these images, the cloud server is not affected by another device, and accurately determines the visible light image and the thermal infrared image of the temperature abnormal area in the target device, which is used as a temperature measurement result of the temperature abnormal area in the target device. It can be learned that the cloud server accurately determines the temperature abnormal area in the target device without generating a misjudgment. This effectively improves accuracy of the temperature measurement result of the target device.

Further, in an inspection planning phase, the cloud server may select a preset position and a preset angle for the robot based on images of the target area that are photographed by the robot at different positions and at different angles and based on some conditions. These conditions include: When the robot is located at the position, the distance between the camera and the target device in the target area falls within the preset range, and when the robot controls the camera to photograph the target area from the angle, the degree of overlapping between the target device and another device is less than the preset threshold. It can be learned that the cloud server may automatically plan an optimal position and angle for the robot based on the foregoing conditions, and factors considered are comprehensive. In this way, the robot can photograph an optimal image at the optimal position and angle in an inspection execution phase. In this case, efficiency is high, and accuracy of a temperature measurement result of the target device may be further improved.

Still further, after determining the thermal infrared image of the temperature abnormal area in the target device, the cloud server may determine a temperature correction value corresponding to the distance between the target device and the camera, to adjust the thermal infrared image of the temperature abnormal area, and obtain the adjusted thermal infrared image of the temperature abnormal area. In this way, the adjusted thermal infrared image of the temperature abnormal area in the target device is closer to an actual temperature of the temperature abnormal area in the target device. This helps improve accuracy of the temperature measurement result of the target device.

Still further, the cloud server may perform a series of calculation on the visible light image and the thermal infrared image of the target area, to obtain the depth image of the target area by the cloud server. Because the depth image of the target area includes distances from all points in the target area to the camera, the cloud server may automatically obtain the distance between the camera and a temperature abnormal area in the target device based on the depth image of the target area, to determine a temperature correction value corresponding to the distance, and complete an adjustment for the temperature measurement result by using the temperature correction value. It can be learned that an entire temperature correction process may be automatically completed by the cloud server, and no operation needs to be performed by the worker. This can reduce manual operation costs.

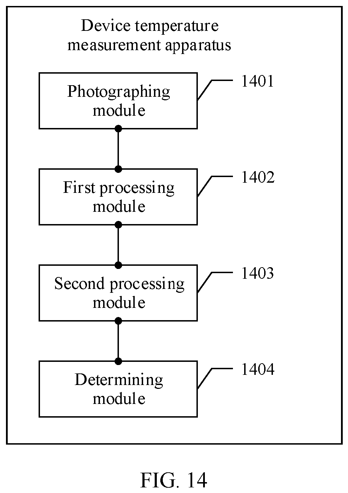

The foregoing describes in detail the device temperature measurement method provided in embodiments of this application. The following describes a device temperature measurement apparatus provided in embodiments of this application. FIG. 14 is a diagram of a structure of a device temperature measurement apparatus according to an embodiment of this application. As shown in FIG. 14, the apparatus includes:

a photographing module 1401, configured to control a camera to photograph a target area, to obtain a visible light image of the target area and a thermal infrared image of the target area, where the target area includes a target device;
a first processing module 1402, configured to process the visible light image of the target area and the thermal infrared image of the target area to obtain a visible light image of the target device and a thermal infrared image of the target device;
a second processing module 1403, configured to process the visible light image of the target device and the thermal infrared image of the target device to obtain a thermal infrared image of a temperature abnormal area in the target device; and
a determining module 1404, configured to determine a temperature measurement result of the temperature abnormal area based on the thermal infrared image of the temperature abnormal area.

In this embodiment of this application, a robot controls, under an instruction of a worker, the camera to photograph a target area including the target device and another device to obtain a visible light image of the target area and a thermal infrared image of the target area, and sends the visible light image and the thermal infrared image to a cloud server. Then, the cloud server may process the visible light image of the target area and the thermal infrared image of the target area, to obtain a visible light image of the target device and a thermal infrared image of the target device. Then, the cloud server may continue to process the visible light image of the target device and the thermal infrared image of the target device, to obtain the thermal infrared image of the temperature abnormal area in the target device. Finally, the cloud server may determine a temperature measurement result of the temperature abnormal area in the target device based on the thermal infrared image of the temperature abnormal area, and report the temperature measurement result to the worker, so that the worker repairs the temperature abnormal area in the target device. In the foregoing process, after obtaining the visible light image and the thermal infrared image of the target area, the cloud server may remove a visible light image and a thermal infrared image of another device from the visible light image and the thermal infrared image of the target area, to obtain the visible light image and the thermal infrared image of the target device. Because the visible light image and the thermal infrared image of the target device present only the target device, in a process of analyzing these images, the cloud server is not affected by another device, and accurately determines the visible light image and the thermal infrared image of the temperature abnormal area in the target device, which is used as a temperature measurement result of the temperature abnormal area in the target device. It can be learned that the cloud server accurately determines the temperature abnormal area in the target device without generating a misjudgment. This effectively improves accuracy of the temperature measurement result of the target device.

In a possible implementation, the apparatus further includes a calculation module, configured to perform calculation on the thermal infrared image of the target area and the visible light image of the target area to obtain a depth image of the target area. The first processing module 1402 is configured to process the depth image of the target area, the visible light image of the target area, and the thermal infrared image of the target area to obtain the visible light image of the target device and the thermal infrared image of the target device.

In a possible implementation, the apparatus further includes a third processing module, configured to align the visible light image of the target area with the thermal infrared image of the target area to obtain an aligned visible light image of the target area. The calculation module is configured to perform calculation on the thermal infrared image and the aligned visible light image of the target area to obtain the depth image of the target area. The first processing module 1402 is configured to process the aligned visible light image of the target area, the thermal infrared image of the target area, and the depth image of the target area to obtain the visible light image of the target device and the thermal infrared image of the target device.

In a possible implementation, the apparatus further includes a fourth processing module, configured to determine a thermal infrared image of a foreground and a visible light image of the foreground in the target area from the thermal infrared image and the aligned visible light image of the target area based on the depth image of the target area, where the foreground includes the target device. The first processing module is configured to process the depth image of the target area, the thermal infrared image of the foreground, and the visible light image of the foreground to obtain the visible light image of the target device and the thermal infrared image of the target device.

In a possible implementation, the first processing module 1402 is configured to: segment the visible light image of the target area and the thermal infrared image of the target area to obtain a visible light image of a target sub-area and a thermal infrared image of the target sub-area, where the target sub-area is an area, in the target area, occupied by the target device and a part of another device; and perform secondary segmentation on the visible light image of the target sub-area and the thermal infrared image of the target sub-area to obtain the visible light image of the target device and the thermal infrared image of the target device.

In a possible implementation, the apparatus further includes: an obtaining module, configured to obtain a distance between the camera and the temperature abnormal area based on the visible light image of the target area and the thermal infrared image of the target area; and an adjustment module, configured to adjust the temperature measurement result based on the distance between the camera and the temperature abnormal area and a preset correspondence, to obtain an adjusted temperature measurement result of the temperature abnormal area, where the preset correspondence indicates a correspondence between the distance and a temperature correction value.

In a possible implementation, the photographing module 1401 is configured to control the camera to photograph the target area at a preset position from a preset angle to obtain the visible light image of the target area and the thermal infrared image of the target area; a distance between the camera at the position and the target device in the target area falls within a preset range; and when the camera photographs the target area from the angle, a degree of overlapping between the target device and the another device is less than a preset threshold.

In a possible implementation, the camera includes a light imaging camera and a thermal imaging camera.

It should be noted that, content such as information exchange between the modules/units of the apparatuses and an execution process is based on the same concept as the method embodiments of this application, and produces the same technical effect as those of the method embodiments of this application. For specific content, refer to the foregoing descriptions in the method embodiments of this application. Details are not described herein again.

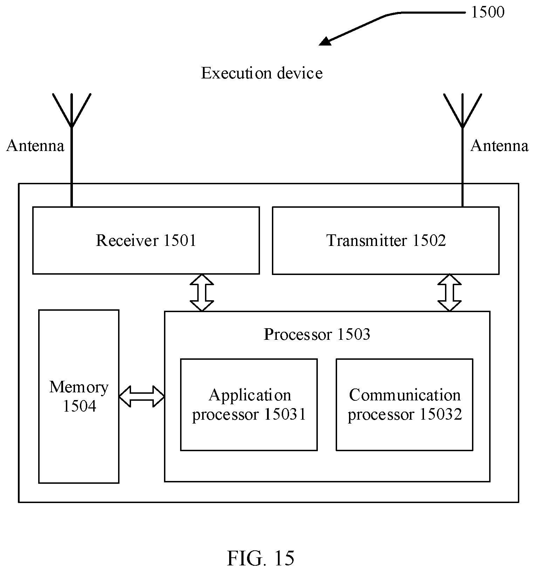

An embodiment of this application further relates to an execution device. FIG. 15 is a diagram of a structure of an execution device according to an embodiment of this application. As shown in FIG. 15, an execution device 1500 may be specifically represented as a mobile phone, a tablet computer, a notebook computer, an intelligent wearable device, a server, or the like. This is not limited herein. The device temperature measurement apparatus described in the embodiment corresponding to FIG. 14 may be deployed on the execution device 1500, and is configured to implement a device temperature measurement function in the embodiment corresponding to FIG. 4. Specifically, the execution device 1500 includes a receiver 1501, a transmitter 1502, a processor 1503, and a memory 1504 (where there may be one or more processors 1503 in the execution device 1500, and one processor is used as an example in FIG. 15). The processor 1503 may include an application processor 15031 and a communication processor 15032. In some embodiments of this application, the receiver 1501, the transmitter 1502, the processor 1503, and the memory 1504 may be connected through a bus or in another manner.

The memory 1504 may include a read-only memory and a random access memory, and provide instructions and data to the processor 1503. A part of the memory 1504 may further include a non-volatile random access memory (non-volatile random access memory, NVRAM). The memory 1504 stores a processor and operation instructions, an executable module, or a data structure; or a subset thereof; or an extended set thereof. The operation instructions may include various operation instructions used to implement various operations.

The processor 1503 controls an operation of the execution device. In a specific application, assemblies of the execution device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1503, or be implemented by using the processor 1503. The processor 1503 may be an integrated circuit chip with a signal processing capability. In an implementation process, steps of the foregoing method may be implemented by using an integrated logical circuit of hardware in the processor 1503 or instructions in a form of software. The processor 1503 may be a general-purpose processor, a digital signal processor (digital signal processing, DSP), a microprocessor, or a microcontroller. The processor 1503 may further include an application-specific integrated circuit (application-specific integrated circuit, ASIC), a field-programmable gate array (field-programmable gate array, FPGA) or another programmable logic device, a discrete gate or transistor logic device, or a discrete hardware assembly. The processor 1503 may implement or perform the method, the steps, and the logical block diagrams disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory 1504. The processor 1503 reads information in the memory 1504 and implements the steps of the foregoing method with reference to hardware of the processor 1503.

The receiver 1501 may be configured to receive input digital or character information, and generate a signal input related to a related setting and function control of the execution device. The transmitter 1502 may be configured to output digital or character information through a first interface. The transmitter 1502 may be further configured to send instructions to a disk group through the first interface, to modify data in the disk group. The transmitter 1502 may further include a display device, for example, a display.

In this embodiment of this application, in one case, the processor 1503 is configured to complete a temperature measurement operation for the target device by using each neural network model (including a first model, a second model, a third model, a fourth model, a fifth model, and the like) in the embodiment corresponding to FIG. 4.

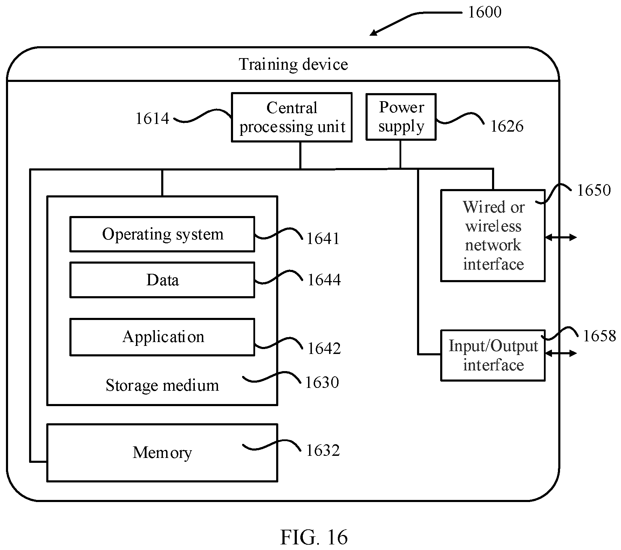

An embodiment of this application further relates to a training device. FIG. 16 is a diagram of a structure of a training device according to an embodiment of this application. As shown in FIG. 16, a training device 1600 is implemented by one or more servers. The training device 1600 may greatly differ due to different configurations or performance, and may include one or more central processing units (central processing units, CPUs) 1614 (for example, one or more processors), a memory 1632, one or more storage media 1630 (for example, one or more mass storage devices) that store an application 1642 or data 1644. The memory 1632 and the storage medium 1630 may be transient storage or persistent storage. A program stored in the storage medium 1630 may include one or more modules (not shown in the figure), and each module may include a series of instruction operations performed on the training device. Further, the central processing unit 1614 may be configured to: communicate with the storage medium 1630, and perform the series of instruction operations in the storage medium 1630 on the training device 1600.

The training device 1600 may further include one or more power supplies 1626, one or more wired or wireless network interfaces 1650, one or more input/output interfaces 1658, and/or one or more operating systems 1641, for example, Windows ServerTM, Mac OS XTM, UnixTM, LinuxTM, and FreeBSDTM.

Specifically, the training device may implement a training process of each neural network model (including a first model, a second model, a third model, a fourth model, a fifth model, and the like) in the embodiment corresponding to FIG. 4.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

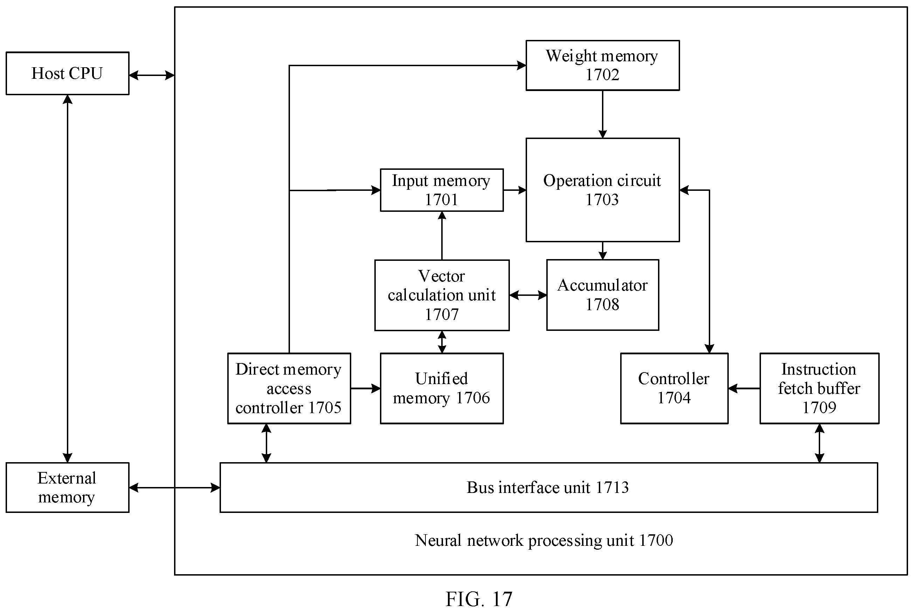

Specifically, FIG. 17 is a diagram of a structure of a chip according to an embodiment of this application. The chip may be represented as a neural-network process unit NPU 1700. The NPU 1700 is mounted to a host CPU (Host CPU) as a coprocessor, and the host CPU assigns a task. A core part of the NPU is an operation circuit 1703. A controller 1704 controls the operation circuit 1703 to extract matrix data in a memory and performs a multiplication operation.

In some implementations, the operation circuit 1703 includes a plurality of processing units (Process Engine, PE) inside. In some implementations, the operation circuit 1703 is a two-dimensional systolic array. The operation circuit 1703 may be alternatively a one-dimensional systolic array or another electronic circuit that can perform mathematical operations such as multiplication and addition. In some implementations, the operation circuit 1703 is a general-purpose matrix processor.

For example, it is assumed that there is an input matrix A, a weight matrix B, and an output matrix C. The operation circuit fetches data corresponding to the matrix B from a weight memory 1702 and buffers the data on each PE in the operation circuit. The operation circuit fetches data of the matrix A from an input memory 1701, to perform a matrix operation with the matrix B to obtain a partial result or a final result of a matrix, and stores the result into an accumulator (accumulator) 1708.

A unified memory 1706 is configured to store input data and output data. Weight data is directly transferred to the weight memory 1702 through a direct memory access controller (Direct Memory Access Controller, DMAC) 1705. The input data is also transferred to the unified memory 1706 through the DMAC.

A BIU is a bus interface unit, namely, a bus interface unit 1713, and is configured to perform interaction between an AXI bus, and the DMAC and an instruction fetch buffer (Instruction Fetch Buffer, IFB) 1709.

The bus interface unit (Bus Interface Unit, BIU for short) 1713 is used by the instruction fetch buffer 1709 to obtain instructions from an external memory, and is further used by the direct memory access controller 1705 to obtain original data of the input matrix A or the weight matrix B from the external memory.

The DMAC is mainly configured to: transfer input data in the external memory DDR to the unified memory 1706, transfer weight data to the weight memory 1702, or transfer input data to the input memory 1701.

A vector calculation unit 1707 includes a plurality of operation processing units, and when necessary, performs further processing on an output of the operation circuit 1703, for example, vector multiplication, vector addition, exponential operation, logarithm operation, and size comparison. The vector calculation unit 1707 is mainly used for non-convolutional/fully connected layer network computation in a neural network, such as batch normalization (batch normalization), pixel-level summation, and upsampling on a predicted label plane.

In some implementations, the vector calculation unit 1707 can store processed output vectors into the unified memory 1706. For example, the vector calculation unit 1707 may apply a linear function or a nonlinear function to the output of the operation circuit 1703, for example, perform linear interpolation on a predicted label plane extracted from a convolutional layer, and for another example, obtain a vector of an accumulated value to generate an activation value. In some implementations, the vector calculation unit 1707 generates a normalized value, a pixel-level sum value, or both. In some implementations, the processed output vector can be used as an activation input to the operation circuit 1703, for example, the processed output vector can be used at a subsequent layer of the neural network.

The instruction fetch buffer (instruction fetch buffer) 1709 connected to the controller 1704 is configured to store instructions used by the controller 1704.

The unified memory 1706, the input memory 1701, the weight memory 1702, and the instruction fetch buffer 1709 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is only an example. The units described as separate parts may or may not be physically separate, and parts displayed as units may or may not be physical units, may be located in one position, or may be distributed on multiple network units. Some or all the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1.   A device temperature measurement method, wherein the method comprises:

controlling a camera to photograph a target area to obtain a visible light image of the target area and a thermal infrared image of the target area, wherein the target area comprises a target device;

processing the visible light image of the target area and the thermal infrared image of the target area to obtain a visible light image of the target device and a thermal infrared image of the target device;

processing the visible light image of the target device and the thermal infrared image of the target device to obtain a thermal infrared image of a temperature abnormal area in the target device; and

determining a temperature measurement result of the temperature abnormal area based on the thermal infrared image of the temperature abnormal area.

2. The method according to claim 1, wherein the method further comprises:

performing calculation on the thermal infrared image of the target area and the visible light image of the target area to obtain a depth image of the target area; and

the processing the visible light image of the target area and the thermal infrared image of the target area to obtain a visible light image of the target device and a thermal infrared image of the target device comprises:

processing the depth image of the target area, the visible light image of the target area, and the thermal infrared image of the target area to obtain the visible light image of the target device and the thermal infrared image of the target device.

3. The method according to claim 2, wherein the method further comprises:

aligning the visible light image of the target area with the thermal infrared image of the target area to obtain an aligned visible light image of the target area;

the performing calculation on the thermal infrared image of the target area and the visible light image of the target area to obtain a depth image of the target area comprises:

performing calculation on the thermal infrared image and the aligned visible light image of the target area to obtain the depth image of the target area; and

the processing the visible light image of the target area and the thermal infrared image of the target area to obtain a visible light image of the target device and a thermal infrared image of the target device comprises:

processing the aligned visible light image of the target area, the thermal infrared image of the target area, and the depth image of the target area to obtain the visible light image of the target device and the thermal infrared image of the target device.

4. The method according to any one of claims 1 to 3, wherein the method further comprises:

determining a thermal infrared image of a foreground and a visible light image of the foreground in the target area from the thermal infrared image and the aligned visible light image of the target area based on the depth image of the target area, wherein the foreground comprises the target device; and

the processing the aligned visible light image of the target area, the thermal infrared image of the target area, and the depth image of the target area to obtain the visible light image of the target device and the thermal infrared image of the target device comprises:

processing the depth image of the target area, the thermal infrared image of the foreground, and the visible light image of the foreground to obtain the visible light image of the target device and the thermal infrared image of the target device.

5. The method according to any one of claims 1 to 4, wherein the processing the visible light image of the target area and the thermal infrared image of the target area to obtain a visible light image of the target device and a thermal infrared image of the target device comprises:

segmenting the visible light image of the target area and the thermal infrared image of the target area to obtain a visible light image of a target sub-area and a thermal infrared image of the target sub-area, wherein the target sub-area is an area, in the target area, occupied by the target device and a part of another device; and

performing secondary segmentation on the visible light image of the target sub-area and the thermal infrared image of the target sub-area to obtain the visible light image of the target device and the thermal infrared image of the target device.

6. The method according to any one of claims 1 to 5, wherein the method further comprises:

obtaining a distance between the camera and the temperature abnormal area based on the visible light image of the target area and the thermal infrared image of the target area; and

adjusting the temperature measurement result based on the distance between the camera and the temperature abnormal area and a preset correspondence, to obtain an adjusted temperature measurement result of the temperature abnormal area, wherein the preset correspondence indicates a correspondence between the distance and a temperature correction value.

7. The method according to any one of claims 1 to 6, wherein the controlling a camera to photograph a target area to obtain a visible light image of the target area and a thermal infrared image of the target area comprises:

controlling the camera to photograph the target area at a preset position from a preset angle to obtain the visible light image of the target area and the thermal infrared image of the target area, wherein a distance between the camera at the position and the target device in the target area falls within a preset range, and when the camera photographs the target area from the angle, a degree of overlapping between the target device and the another device is less than a preset threshold.

8. The method according to claim 7, wherein the camera comprises a light imaging camera and a thermal imaging camera.

9. A device temperature measurement apparatus, wherein the apparatus comprises:

a photographing module, configured to control a camera to photograph a target area to obtain a visible light image of the target area and a thermal infrared image of the target area, wherein the target area comprises a target device;
a first processing module, configured to process the visible light image of the target area and the thermal infrared image of the target area to obtain a visible light image of the target device and a thermal infrared image of the target device;
a second processing module, configured to process the visible light image of the target device and the thermal infrared image of the target device to obtain a thermal infrared image of a temperature abnormal area in the target device; and
a determining module, configured to determine a temperature measurement result of the temperature abnormal area based on the thermal infrared image of the temperature abnormal area.

10. The apparatus according to claim 9, wherein the apparatus further comprises:

a calculation module, configured to perform calculation on the thermal infrared image of the target area and the visible light image of the target area to obtain a depth image of the target area, wherein
the first processing module is configured to process the depth image of the target area, the visible light image of the target area, and the thermal infrared image of the target area to obtain the visible light image of the target device and the thermal infrared image of the target device.

11. The apparatus according to claim 10, wherein the apparatus further comprises:

a third processing module, configured to align the visible light image of the target area with the thermal infrared image of the target area to obtain an aligned visible light image of the target area, wherein
the calculation module is configured to perform calculation on the thermal infrared image and the aligned visible light image of the target area to obtain the depth image of the target area; and
the first processing module is configured to process the aligned visible light image of the target area, the thermal infrared image of the target area, and the depth image of the target area to obtain the visible light image of the target device and the thermal infrared image of the target device.

12. The apparatus according to any one of claims 9 to 11, wherein the apparatus further comprises:

a fourth processing module, configured to determine a thermal infrared image of a foreground and a visible light image of the foreground in the target area from the thermal infrared image and the aligned visible light image of the target area based on the depth image of the target area, wherein the foreground comprises the target device, wherein
the first processing module is configured to process the depth image of the target area, the thermal infrared image of the foreground, and the visible light image of the foreground to obtain the visible light image of the target device and the thermal infrared image of the target device.

13. The apparatus according to any one of claims 9 to 12, wherein the first processing module is configured to:

segment the visible light image of the target area and the thermal infrared image of the target area to obtain a visible light image of a target sub-area and a thermal infrared image of the target sub-area, wherein the target sub-area is an area, in the target area, occupied by the target device and a part of another device; and perform secondary segmentation on the visible light image of the target sub-area and the thermal infrared image of the target sub-area to obtain the visible light image of the target device and the thermal infrared image of the target device.

14. The apparatus according to any one of claims 9 to 13, wherein the apparatus further comprises:

an obtaining module, configured to obtain a distance between the camera and the temperature abnormal area based on the visible light image of the target area and the thermal infrared image of the target area; and an adjustment module, configured to adjust the temperature measurement result based on the distance between the camera and the temperature abnormal area and a preset correspondence, to obtain an adjusted temperature measurement result of the temperature abnormal area, wherein the preset correspondence indicates a correspondence between the distance and a temperature correction value.

15. The apparatus according to any one of claims 9 to 14, wherein the photographing module is configured to control the camera to photograph the target area at a preset position from a preset angle to obtain the visible light image of the target area and the thermal infrared image of the target area, wherein a distance between the camera at the position and the target device in the target area falls within a preset range, and when the camera photographs the target area from the angle, a degree of overlapping between the target device and the another device is less than a preset threshold.

16. The apparatus according to any one of claims 9 to 15, wherein the camera comprises a light imaging camera and a thermal imaging camera.

17. A device temperature measurement apparatus, wherein the apparatus comprises a memory and a processor, the memory stores code, the processor is configured to execute the code, and when the code is executed, the device temperature measurement apparatus performs the method according to any one of claims 1 to 8.

18. A computer storage medium, wherein the computer storage medium stores one or more instructions, and when the instructions are executed by one or more computers, the one or more computers are enabled to perform the method according to any one of claims 1 to 8.

19. A computer program product, wherein the computer program product stores instructions, and when the instructions are executed by a computer, the computer is enabled to perform the method according to any one of claims 1 to 8.

FIG. 1

Interaction interface

| Image | Processing result of the image |

Memory ⟷ Processor

| Data training/Machine learning/Deep learning | Searching/ Inference/ Decision-making | ... |

Data processing device (server)

13:21

FIG. 2a

FIG. 2b

300

Execution device 210

Data storage system 250

Communication network

Local device 301

Local device 302

Examples

FIG. 2c

Data collection device
160

100

Training sample

Database
130

Training device 120

Execution
device 110

Client
device
140

I/O
interface
112

CNN feature extraction
model

Calculation module 111

Data storage
system 150

FIG. 3

Control a camera to photograph a target area to obtain a visible light image of the target area and a thermal infrared image of the target area, where the target area includes a target device /— 401

Process the visible light image of the target area and the thermal infrared image of the target area to obtain a visible light image of the target device and a thermal infrared image of the target device /— 402

Process the visible light image of the target device and the thermal infrared image of the target device to obtain a thermal infrared image of a temperature abnormal area /— 403

Determine a temperature measurement result of the temperature abnormal area based on the thermal infrared image of the temperature abnormal area /— 404

FIG. 4

Hollow-out circular dot matrix glass panel

Heating panel

Calibration board support panel

FIG. 5

Visible light image of the
calibration board

Thermal infrared image
of a calibration board

FIG. 6a

Thermal infrared image
of a calibration board

Visible light image that can be
cropped

Visible light image of the
calibration board

Visible light image that can be cropped

FIG. 6b

Thermal infrared image of a
calibration board

Image that has been cropped

Cropped visible light image
of the calibration board

Image that has been cropped

FIG. 6c

| Cropped visible light images of target areas | Thermal infrared images of the target areas | Project the cropped visible light images of the target areas on the thermal infrared images of the target areas | Pixel matching relationship between the cropped visible light images of the target areas and the thermal infrared images of the target areas |
|---|---|---|---|

FIG. 7

EP 4 614 125 A1

FIG. 8

EP 4 614 125 A1

```
┌──────────────┐        ┌──────────────────┐
│   Pseudo     │        │ Pseudo infrared  │
│   infrared   │───────▶│ image individual │
│  image of a  │   │    │ feature          │
│  target area │   │    │ extraction module│
└──────────────┘   │    └──────────────────┘
                   │                        │
                   │    ┌──────────────────┐│   ┌────────────┐   ┌──────────────────┐   ┌──────────────┐
                   │    │ Pseudo infrared  │▼   │            │   │ High-resolution  │   │              │
                   └───▶│ image and thermal│──▶│  Feature   │──▶│  reconstruction  │──▶│ Disparity map│
                   │    │ infrared image   │   │   fusion   │   │     module       │   │              │
┌──────────────┐   │    │ common feature   │   │   module   │   └──────────────────┘   └──────────────┘
│   Thermal    │   │    │ extraction module│   │            │
│  infrared    │───┤    └──────────────────┘   └────────────┘
│  image of a  │   │                               ▲
│  target area │   │    ┌──────────────────┐       │
└──────────────┘   │    │ Thermal infrared │       │
                   └───▶│ image individual │───────┘
                        │ feature          │
                        │ extraction module│
                        └──────────────────┘
```

FIG. 9

FIG. 10

Visible light
image and
thermal infrared
image of a target
sub-area

Upsampling
module

Upsampling
module

Upsampling
module

Upsampling
module

Upsampling
module

3*3 convolution
kernel

3*3 convolution
kernel

3*3 convolution
kernel

3*3 convolution
kernel

1*1 convolution
kernel

Decoder

Feature fusion
module based on
a double spatial
graph

Visible light
image feature
encoder

Feature fusion
module

Thermal infrared
image feature
encoder

Visible light
image of a
foreground in a
target area

Thermal infrared
image of a target
area

Thermal infrared
image of a
foreground in a
target area

FIG. 11

FIG. 12

EP 4 614 125 A1

FIG. 13

FIG. 14

1500

Execution device

| Antenna | | Antenna |
|---------|---|---------|

| Receiver 1501 | Transmitter 1502 |
|---------------|------------------|

Processor 1503

| Memory 1504 | Application processor 15031 | Communication processor 15032 |
|-------------|-----------------------------|-------------------------------|

FIG. 15

1600

Training device

1614 — Central processing unit

Power supply — 1626

Wired or wireless network interface — 1650

Operating system — 1641

Data — 1644

Application — 1642

Storage medium — 1630

Input/Output interface — 1658

Memory — 1632

FIG. 16

```
                    ┌──────────────────┐
                    │  Weight memory   │
                    │      1702        │
                    └────────┬─────────┘
                             │
                             ▼
┌───────────────┐   ┌──────────────────┐
│ Input memory  │──▶│ Operation circuit│◀─┐
│     1701      │   │      1703        │  │
└───────────────┘   └────────┬─────────┘  │
        ▲                    │            │
        │                    ▼            │
┌───────────────┐   ┌──────────────────┐  │
│    Vector     │   │   Accumulator    │  │
│calculation unit│◀─▶│      1708        │  │
│     1707      │   └──────────────────┘  │
└───────────────┘                         │
```

Host CPU

External memory

Direct memory access controller 1705

Unified memory 1706

Controller 1704

Instruction fetch buffer 1709

Bus interface unit 1713

Neural network processing unit 1700

FIG. 17

## INTERNATIONAL SEARCH REPORT

| | International application No. |
|---|---|
| | **PCT/CN2023/131686** |

| A. | CLASSIFICATION OF SUBJECT MATTER |
|---|---|

G01K 11/00(2006.01)i; G01J 5/48(2022.01)i

According to International Patent Classification (IPC) or to both national classification and IPC

| B. | FIELDS SEARCHED |
|---|---|

Minimum documentation searched (classification system followed by classification symbols)

IPC:G01K G01J

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; IEEE; ENTXTC: 温度, 测温, 可见光, 图像, 红外, 深度, 对齐, 前景, 分割, 区域, 距离, 修正, 补偿, 角度, visible light, temperature, infrared, picture, imag+, depth, compensat+, distance

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114485953 A (HANGZHOU HIKVISION DIGITAL TECHNOLOGY CO., LTD.) 13 May 2022 (2022-05-13)<br>description, paragraphs [0130]-[0279], and figures 1-9 | 1, 5-9, 13-19 |
| A | CN 112257664 A (OPPO GUANGDONG MOBILE TELECOMMUNICATIONS CO., LTD.) 22 January 2021 (2021-01-22)<br>entire document | 1-19 |
| A | CN 109029731 A (HOHAI UNIVERSITY, CHANGZHOU) 18 December 2018 (2018-12-18)<br>entire document | 1-19 |
| A | CN 110987189 A (BEIJING DOSEE TECHNOLOGY CO., LTD.) 10 April 2020 (2020-04-10)<br>entire document | 1-19 |
| A | WO 2021232587 A1 (PINGAN INTERNATIONAL SMART CITY TECHNOLOGY CO., LTD.) 25 November 2021 (2021-11-25)<br>entire document | 1-19 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 January 2024** | **04 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/131686**

| Patent document cited in search report | | | Publication date (day/month/year) | Patent family member(s) | Publication date (day/month/year) |
|---|---|---|---|---|---|
| CN | 114485953 | A | 13 May 2022 | None | |
| CN | 112257664 | A | 22 January 2021 | None | |
| CN | 109029731 | A | 18 December 2018 | None | |
| CN | 110987189 | A | 10 April 2020 | None | |
| WO | 2021232587 | A1 | 25 November 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211427331